# EUROPÄISCHE PATENTSCHRIFT

(11) **EP 2 367 638 B1**
(45) Veröffentlichungstag und Bekanntmachung des Hinweises auf die Patenterteilung: **01.07.2015**
(21) Anmeldenummer: 09747849.9
(22) Anmeldetag: 06.11.2009
(51) Int. Cl.: B05D 1/18, B05D 7/00, B05D 1/00, B05D 1/04, B05D 7/14

(54) **VERFAHREN ZUR BESCHICHTUNG VON OBERFLÄCHEN MIT PARTIKELN UND VERWENDUNG DER NACH DIESEM VERFAHREN HERGESTELLTEN BESCHICHTUNGEN**
METHOD FOR COATING SURFACES WITH PARTICLES AND USE OF THE COATINGS PRODUCED BY THIS METHOD
PROCÉDÉ DE REVÊTEMENT DE SURFACES PAR DES PARTICULES, ET UTILISATION DES REVÊTEMENTS FABRIQUÉS PAR CE PROCÉDÉ

(30) Priorität: 12.11.2008 DE 102008043682
(43) Veröffentlichungstag der Anmeldung: 28.09.2011
(73) Patentinhaber: Chemetall GmbH, 60487 Frankfurt am Main (DE)
(72) Erfinder: ETTRICH, Cindy, 65929 Frankfurt am Main (DE); SCHWAMB, Michael, 60325 Frankfurt (DE); WASSERFALLEN, Dr. Daniel, 65929 Frankfurt (DE)
(74) Vertreter: Hübner, Günter
(86) Internationale Anmeldenummer: PCT/EP2009/064741
(87) Internationale Veröffentlichungsnummer: WO 2010/054985

(56) Entgegenhaltungen:
- EP-A2- 0 891 817
- WO-A1-96/02383
- WO-A1-98/42446
- US-A1- 2003 157 260
- US-A1- 2004 053 037
- US-A1- 2004 157 047

## Beschreibung

Die Erfindung betrifft ein Verfahren zur Beschichtung von insbesondere metallischen Oberflächen mit Partikeln zum Erzielen einer hohen Partikeldichte, eine entsprechende Beschichtung sowie die Verwendung der nach diesem Verfahren hergestellten Beschichtungen.

Es sind viele Verfahren bekannt, mit denen Partikel über flüssige Systeme auf insbesondere metallische Oberflächen aufgebracht werden können. Die meisten Verfahren haben den Nachteil, dass die angewendeten Techniken oft vergleichsweise aufwendig und teuer sind, um eine höhere Partikeldichte bei vergleichsweise dicken organischen oder im Wesentlichen organischen Beschichtungen zu erzielen. Je höher der Gehalt an Fest- und Wirkstoffen in der flüssigen Zusammensetzung ist, desto größere Probleme können auftreten, um eine größere Partikeldichte insbesondere in Form von definierten Schichten aus dünnen Schichten, insbesondere von Monolagen oder Schichten mit einer Dicke von mehreren Partikeldurchmessern als Partikelschicht auf der insbesondere metallischen Oberfläche abzuscheiden und entsprechend geschlossene Beschichtungen daraus herzustellen.

In der heute üblichen industriellen Praxis löst man dieses Problem durch den Einsatz von kathodischen Tauchlackierungen (KTL), bei denen mit Hilfe von elektrischen Feldern und entsprechend angepassten Lackformulierungen eine relativ dicke deckende Schicht auf dem Substrat abgeschieden wird.

Diese Technik hat den Nachteil, dass neben der notwendigen Menge an elektrischer Energie und neben geeigneten Tauchbecken, die zu einer Erhöhung der Kosten führen, auch sogenannte Kantenfluchten auftreten, da elektrische Felder an makroskopischen Kanten inhomogen aufgebaut werden und die Kanten ungleichmäßig und eventuell auch unvollständig beschichtet werden. Zudem ist die Beschichtung von Hohlräumen wegen der Umgriffsproblematik aufgrund der mangelnden elektrischen Feldstärken kaum möglich oder sogar unmöglich und erfordert ein hohes Maß an Aufwand, um diese Hohlräume zu vermeiden und eine geschlossene Schicht zu erzeugen.

Beispielsweise weist diese Technik bei einer elektrischen Tauchlackierung (ETL) wie z.B. bei der kathodischen Tauchlackierung (KTL) die folgenden Nachteile auf: Ein entsprechendes Tauchbad ist zusammen mit allen elektrischen und mechanischen Einrichtungen von der Temperaturführung, Stromversorgung und elektrischen Isolierung, Umwälzeinrichtung und Zugabeeinrichtung bis zur Entsorgung der Anolyt-Säure, die bei der elektrolytischen Beschichtung entsteht, und mit einer Ultrafiltration zur Lackrezyklierung sowie Steuereinrichtungen sehr aufwendig aufgebaut. Die Prozessführung erfordert einen sehr hohen technischen Aufwand auch aufgrund der großen Stromstärken und Energiemengen sowie bei der Vergleichmäßigung der elektrischen Parameter über das Badvolumen und bei der präzisen Einstellung aller Prozessparameter sowie bei der Wartung und Säuberung der Anlage.

Es ist ein lange verfolgter Wunsch, homogene Beschichtungen aus oder mit einer hohen Zahl an Partikeln und mit einer hohen Partikeldichte effizient und kostengünstig auszubilden, um hieraus möglichst geschlossene und im Wesentlichen ebene Beschichtungen herzustellen. Bei der Verwendung von organischen Partikeln können diese in vielen Ausführungsvarianten verfilmt werden. Bei anorganischen Partikeln wie z.B. bei Titandioxid bzw. bei Aluminiumoxid erzielt man mit dieser Technik oft die höchstmögliche Funktionalisierung einer insbesondere metallischen Oberfläche. Oft bietet es sich hierbei an, Nanopartikel oder/und besonders feine Partikel hierzu einzusetzen.

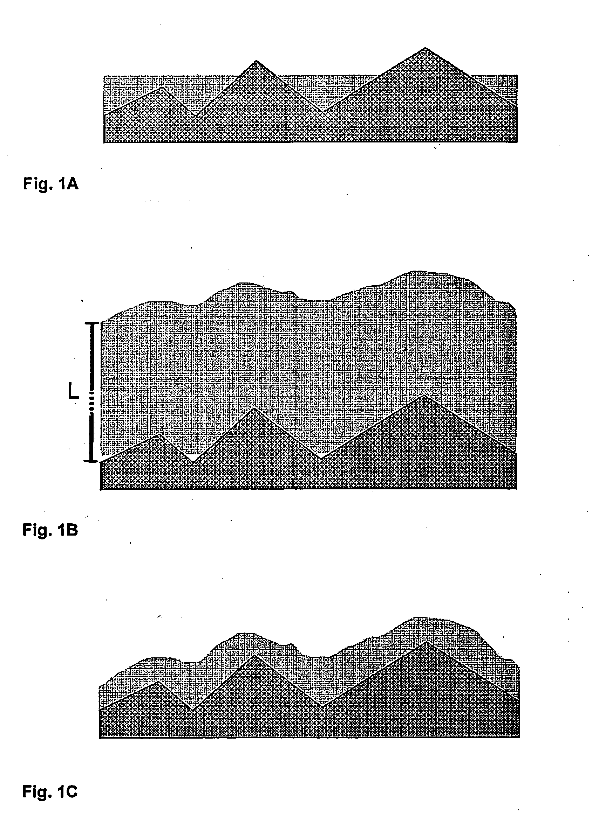

Wenn organische Partikel aus einer Dispersion auf einer metallischen Oberfläche abgeschieden werden, hat dies üblicherweise den Nachteil, dass rheologische Hilfsmittel wie z.B. Netzmittel oder/und Filmbildungshilfsmittel als Zusatz zu der Dispersion nötig sind, um einen möglichst gleichmäßig dicken Trockenfilm über vergleichsweise rare Oberflächen aufzubringen. Während des Trocknens oder/und Verfilmens können hierbei Störungen wie in Fig. 1A schematisch im Querschnitt dargestellt auftreten. Bei im Mikrobereich rauen technischen Oberflächen treten üblicherweise keine sich selbst regulierenden, flächendeckenden, geschlossenen und homogenen Verteilungen über Ecken, Kanten und Vertiefungen auf, sondern das filmbildende Material kann sich in den Vertiefungen sammeln (siehe Fig. 1A), wie z.B. bei der stromlosen Aufbringung bei einem Coil-Coating-Verfahren z.B. durch Rakeln. Dies führte dazu, dass bei vielen Anwendungen wie z. B. beim Coil-Coating-Verfahren die Vertiefungen im Mikrobereich ausgefüllt werden, während die Beschichtungsstärke an den Kanten und Spitzen minimal ist und manche Kanten und Spitzen sogar aus der Beschichtung herausragen (s. Fig. 1A).

Wenn anorganische Partikel in einem starken elektrischen Feld mit von aussen angelegter Spannung abgeschieden werden, hat dies üblicherweise den Nachteil, dass die Partikel bevorzugt an Stellen mit hoher elektrischer Feldstärke abgeschieden werden, was zu ungleichmäßigen Schichtdicken und Verteilungen führt. Diese Unregelmäßigkeiten im Mikrometerbereich fallen bei den elektrophoretischen Tauchverfahren aufgrund der hohen Schichtstärken in der Größenordnung von etwa 20 µm nicht mehr so stark auf (Fig. 1B).

Fig. 1C gibt den Trockenfilm des erfindungsgemäßen Verfahrens der organischen oder im Wesentlichen organischen Beschichtung auf dem insbesondere metallischen Substrat unter Vernachlässigung von mindestens einer Vorbehandlungsschicht und von gegebenenfalls auch mindestens einer weiteren Beschichtung wie z.B. einer farbigen Lackschicht schematisch im Querschnitt wieder.

US 2004/0157047 A1 lehrt ein kontinuierliches Verfahren zur Herstellung von "self-assembled multilayer coatings" auf organischen Filmen. WO 96/02383 A1 beschreibt Verfahren zur Ausbildung von Multilayer-Strukturen auf einem Substrat mit ultradünnen Filmen aus unterschiedlich geladenen ionischen Materialien. Bei beiden Dokumenten wird eine Wechsellagerung mit sehr dünnen entgegen gesetzt geladenen Schichten aus bestimmten Substanzen beschrieben.

Es besteht daher die Aufgabe, ein Verfahren vorzuschlagen, mit dem eine hohe Zahl an Partikeln über ein flüssiges System stromlos und bei Bedarf auch spülfest auf insbesondere metallischen Oberflächen homogen, flächendeckend und mit hoher Partikeldichte auf einfache Weise abgeschieden werden kann. Es bestand ferner die Aufgabe, ein möglichst einfaches mehrstufiges Verfahren hierfür vorzuschlagen.

Die Aufgabe wird gelöst mit einem Verfahren zum stromlosen Beschichten von metallischen Oberflächen von Gegenständen, die gegebenenfalls vorbeschichtet sein können, (= zu beschichtende Oberflächen) mit einer Vielzahl an anorganischen wasserunlöslichen oder/und organischen wasserunlöslichen Partikeln unter Ausbildung einer spülfesten Partikelschicht, bei dem die Partikel in einer stabilisierbaren oder stabilen wässerigen Zusammensetzung in Form einer Dispersion auf den zu beschichtenden Oberflächen aufgebracht werden und vorwiegend durch elektrostatische Kräfte auf den zu beschichtenden Oberflächen aufgebracht und festgehalten werden, dadurch gekennzeichnet,
dass die zu beschichtenden Oberflächen zuerst mit einem Aktivierungsmittel aktiviert werden, wobei mit dem Aktivierungsmittel auf den zu beschichtenden Oberflächen eine Aktivierungsschicht mit Ladungen ausgebildet wird, wobei diese Ladungen den Ladungen der anschließend aufzubringenden Partikel der Zusammensetzung entgegen gesetzt geladen sind oder/und geladen werden,
dass eine Aktivierungsschicht auf der zu beschichtenden Oberfläche ausgebildet wird, die bei einer kationischen Aktivierungsschicht durch Kontaktieren mit mindestens einer kationischen Verbindung und die bei einer anionischen Aktivierungsschicht durch Kontaktieren mit mindestens einer anionischen Substanz erzeugt wird,
dass als kationische Verbindung(en) zur Ausbildung der Aktivierungsschicht mindestens ein protonierbares oder/und protoniertes Silan verwendet wird oder dass als anionische Substanz(en) zur Ausbildung der Aktivierungsschicht mindestens eine deprotonierbare Verbindung, mindestens eine deprotonierte Verbindung oder/und mindestens ein deprotoniertes Anion ausgewählt aus a) Substanzen mit Gruppen von Borat, Carbonat, Carboxylat, Halogenid wie z.B. Chlorid oder/und Fluorid, Hydroxid, Phosphat, Phosphonat, Sulfat oder/und Sulfonat und b) negativ geladene Komplexen oder/und deren Estern oder c) anionisches organisches Polymer verwendet wird/werden,
dass die bei einem Beschichtungsschritt mit einer Partikel enthaltenden Zusammensetzung aufgebrachten Partikel entgegen gesetzt zu den Ladungen der Aktivierungsschicht geladen sind oder/und geladen werden,
dass als Partikel anionisch stabilisierte wässerige Polymerpartikeldispersionen oder kationisch stabilisierte wässerige Polymerpartikeldispersionen verwendet werden,
dass bei einem oder bei einem jeden Beschichtungsschritt mit einer Partikel enthaltenden Zusammensetzung jeweils eine Schicht in einer mittleren Dicke von mehreren mittleren Partikelgrößen der aufgebrachten Partikel auf den zu beschichtenden Oberflächen ausgebildet wird und gegebenenfalls die oder jede Partikelschicht anschließend verfilmt oder/und vernetzt wird, wobei aus den mit Partikeln beschichteten Oberflächen im Wesentlichen geschlossene oder geschlossene Beschichtungen mit einer Schichtdicke im Bereich von 100 nm bis 15 µm hergestellt werden.

Vorzugsweise werden die Partikel mit einer stabilisierbaren oder stabilen wässerigen Zusammensetzung in Form einer Dispersion (= Suspension oder/und Emulsion) mittels elektrostatischer Anziehungskräfte auf den zu beschichtenden Oberflächen aufgebracht. Vorzugsweise werden die Partikel, die mit einer stabilisierbaren oder stabilen wässerigen Zusammensetzung in Form einer Dispersion (= Suspension oder/und Emulsion) insbesondere elektrostatisch aufgebracht wurden, anschließend elektrostatisch oder elektrostatisch und mit van-der-Waals-Kräften, kovalenten Bindungen oder/und Komplexbildungsreaktionen auf den Oberflächen festgehalten.

Vorzugsweise wird bei dem erfindungsgemäßen Verfahren bei dem einen oder bei einem jeden Beschichtungsschritt mit einer Partikel enthaltenden Zusammensetzung unabhängig von dem weiteren Andauern dieses Beschichtungsschritts jeweils eine Schicht in einer mittleren Dicke von ein oder mehreren mittleren Partikelgrößen der aufgebrachten Partikel auf den zu beschichtenden Oberflächen ausgebildet.

Vorzugsweise sind oder/und werden die Partikel im Falle von mindestens einem zweiten elektrostatischen Beschichtungsschritt mit einer Partikel enthaltenden Zusammensetzung entgegen gesetzt geladen zu den Ladungen der jeweils zuvor aufgebrachten Schicht von Partikeln. Wenn mehrere Partikelschichten aus Partikel enthaltenden Zusammensetzungen übereinander ausgebildet werden, sind oder/und werden diese Schichten vorzugsweise abwechselnd aufgebaut aus Partikeln, die mit Protonen oder/und Kationen positiv geladen sind oder/und werden und aus Partikeln, die mit Anionen negativ geladen sind oder/und werden.

Die zu beschichtenden Gegenstände oder/und Partikel können solche aus jedem beliebigen Material sein. Bevorzugt weisen die Gegenstände oder/und Partikel Oberflächen aus Metall, Legierung, Kunststoff, Verbundwerkstoff, Naturwerkstoff, Glas oder/und Keramik auf. Als Gegenstände können auch jegliche üblichen metallischen Gegenstände dienen, die vor Korrosion zu schützen sind. Es können jedoch grundsätzlich alle Gegenstände aus jeweils mindestens einem Kunststoff, Verbundwerkstoff, Naturwerkstoff, Glas, Keramik oder/und metallischem Werkstoff sein, die gegebenenfalls schon beschichtet sind, die jetzt beschichtet werden sollen. Beispielsweise lassen sich Kunststoffelemente für Karosserien, Stoßstangen, Geräte und Gebäude in erfindungsgemäßer Weise beschichten. Gleichartiges wie für die Gegenstände gilt auch für die Partikel, wobei beschichtete Partikel hergestellt werden. Dies gilt insbesondere für größere Partikel und für compoundierte Partikel.

Der Begriff "stromloses Beschichten" im Sinne dieser Anmeldung bedeutet, dass beim Beschichten mit der Partikel enthaltenden Zusammensetzung von außen keine elektrische Spannung angelegt wird, die das Aufbringen der Partikel der Zusammensetzung aufgrund elektrostatischer Anziehung wesentlich beeinträchtigt.

Der Begriff "zu beschichtende Oberfläche(n)" im Sinne dieser Anmeldung bedeutet insbesondere metallische Oberflächen von insbesondere metallischen Gegenständen oder/und von insbesondere metallischen Partikeln, die gegebenenfalls z.B. mit einer metallischen Beschichtung wie z.B. auf Basis von Zink oder Zinklegierung oder/und mit mindestens einer Beschichtung einer Vorbehandlungs- oder Behandlungszusammensetzung wie z.B. auf Basis von Chromat, Cr³⁺, Ti-Verbindung, Zr-Verbindung, Silan/Silanol/Siloxan/Polysiloxan oder/und organisches Polymer vorbeschichtet sein können.

Der Begriff "Polymer(e)" im Sinne dieser Anmeldung bedeutet Monomer(e), Oligomer(e), Polymer(e), Copolymer(e), Blockcopolymer(e), Pfropfcopolymer(e), deren Gemische und deren Compoundierungen auf organischer oder/und im Wesentlichen organischer Basis. Üblicherweise liegt/liegen die "Polymer(e)" im Sinne dieser Anmeldung vorwiegend oder gänzlich als Polymer(e) oder/und Copolymer(e) vor.

Der Begriff "Vorbehandlung" bedeutet eine Behandlung (= Kontaktieren der zu beschichtenden Oberflächen mit einer üblicherweise flüssigen Zusammensetzung), bei der anschließend, gegebenenfalls nach einem nachfolgenden Beschichten, eine weitere Beschichtung zum Schützen der Schichtabfolge und des Gegenstandes wie z.B. mindestens ein Lack aufgebracht wird.

Der Begriff "Behandlung" oder "Passivierung" bedeutet ein Kontaktieren der zu beschichtenden Oberflächen mit einer üblicherweise flüssigen Zusammensetzung, bei der anschließend für gewisse Zeit oder auf Dauer keine weitere schützende Beschichtung wie z.B. mindestens eine Lackschicht aufgebracht wird. Hierbei kann beispielsweise ein Öl, eine Öl enthaltende Zusammensetzung oder eine passivierende Zusammensetzung wie z.B. mit einem Gehalt an mindestens einer Titan- oder/und Zirkoniumverbindung aufgebracht werden. Falls diese Oberflächen später dauerhaft hochwertig geschützt werden sollen, sind diese Beschichtungen der Behandlung oder Passivierung oft erst zu entfernen. Darüber hinaus kann der Begriff "Behandlung" bei bestimmten Prozeßstufen teilweise auch ein Kontaktieren und beispielsweise Reinigen, Beizen oder/und Beschichten unabhängig von der zuvor genannten Definition bedeuten.

Der Begriff "spülfest" im Sinne dieser Anmeldung bedeutet, dass unter den Bedingungen der jeweiligen Anlage und Verfahrensabfolge die jeweils letzte Beschichtung wie z.B. a) eine Aktivierungsschicht oder/und b) eine Partikelschicht durch ein Spülvorgang (= Spülen) nicht gänzlich entfernt wird und damit bei a) seine aktivierende Wirkung für die elektrostatische Beschichtung mit den nachfolgend aufzubringen Partikeln bzw. bei b) eine aus Partikeln hergestellte Beschichtung nicht gänzlich entfernt wird, so dass aus der Partikelschicht eine Beschichtung hergestellt werden kann, vorzugsweise eine geschlossene Beschichtung.

Der Begriff "wasserunlösliche Partikel" im Sinne dieser Anmeldung bedeutet, dass die Wasserlöslichkeit der Partikel so gering ist, dass kein oder nur ein minimaler Übertritt der einzelnen Bestandteile der Partikel in die wässerige Phase auftritt. Zu diesen wasserunlöslichen Partikeln gehören auch stabilisierte Partikel, bei denen die Stabilisierung in der wässerigen Phase erfolgt oder/und vorliegt und vorzugsweise mit mindestens einem nichtionischen oder/und ionischen Emulgator, und optional mit mindestens einem Verlaufsmittel oder/und mit mindestens einem Verdickungsmittel erreicht werden kann.

Der Begriff "elektrisch leitfähige Partikel" bei der Partikel enthaltenden Zusammensetzung im Sinne dieser Anmeldung bedeutet, dass die elektrische Leitfähigkeit der Partikel so gering ist, dass keine wesentliche Beeinträchtigung der elektrischen Anziehung der entgegen gesetzten Ladungen zwischen Aktivierungsschicht und Partikeln oder zwischen den Partikeln verschiedener Partikelschichten übereinander auftritt.

Bei dem erfindungsgemäßen Verfahren gibt es zwei grundsätzliche Verfahrensvarianten:
Bei dem erfindungsgemäßen Verfahren ist es bevorzugt, eine Aktivierungsschicht auf der zu beschichtenden Oberfläche auszubilden, die in der Verfahrensvariante A) bei einer kationischen Aktivierungsschicht durch Kontaktieren mit mindestens einer kationischen Verbindung und die in der Verfahrensvariante B) bei einer anionischen Aktivierungsschicht durch Kontaktieren mit mindestens einer anionischen Verbindung erzeugt wird.

Bei dem erfindungsgemäßen Verfahren ist es bevorzugt, dass als kationische Verbindung(en) mindestens ein protonierbares oder/und protoniertes Silan oder/und mindestens eine protonierbare oder/und protonierte insbesondere Stickstoff-haltige Verbindung verwendet wird/werden oder dass als anionische Verbindung(en) mindestens eine deprotonierbare Verbindung oder/und mindestens ein deprotoniertes Anion oder/und mindestens eine deprotonierbare oder/und deprotonierte (= anionische) Verbindung verwendet wird/werden.

Entweder ist oder/und wird bei der Verfahrensvariante A) die Aktivierungsschicht mit Protonen oder/und Kationen positiv geladen (= positive Beladung) wie z.B. mit mindestens einem Kation von mindestens einer quaternären Ammoniumverbindung oder/und mit mindestens einer Säure und die erste darauf aufgebrachte Partikelschicht einer Partikel enthaltenden Zusammensetzung ist oder/und wird entsprechend mit Anionen, insbesondere anionischen Gruppen wie z. B. Carboxylatgruppen oder/und Hydroxidgruppen, negativ geladen - oder umgekehrt ist oder/und wird bei der Verfahrensvariante B) die Aktivierungsschicht mit anionischen Gruppen negativ geladen (= negative Beladung) und die erste darauf aufgebrachte Schicht aus Partikeln einer Zusammensetzung ist oder/und wird mit Protonen oder/und mit Kationen positiv geladen. Anionische Verbindungen werden im Sinne dieser Anmeldung ebenfalls als Anionen bezeichnet.

Falls mehrere Schichten, insbesondere 2, 3, 4 oder 5 Schichten, aus Partikeln von jeweils oder abwechselnd verschiedene Partikel enthaltenden Zusammensetzungen übereinander ausgebildet werden, sind diese Schichten vorzugsweise abwechselnd aus Partikeln, die mit Protonen (H⁺) oder/und mit Kationen positiv geladen sind oder/und werden sowie aus Partikeln, die aufgrund anionischer Gruppen wie z. B. Carboxylatgruppen oder Hydroxidgruppen negativ geladen sind oder/und werden. Der Begriff "Protonen oder/und Kationen" umfasst hierbei hierbei ebenso Verbindungen mit funktionellen Gruppen wie z.B. quaternären Ammoniumgruppen und Komplexbildner.

Die Aktivierung oder/und die Verstärkung der Aktivierung dient/dienen der Aufladung der Oberflächen mit vielen elektrischen Ladungen. Wenn kationisch geladene Aktivierungsmittel auf die Oberflächen aufgebracht werden, müssen die danach aufzubringenden Partikel anionisch geladen sein, um entsprechend angezogen und verankert zu werden. Wenn anionisch geladene Aktivierungsmittel auf die Oberflächen aufgebracht werden, müssen die danach aufzubringenden Partikel kationisch geladen sein, um entsprechend angezogen und verankert zu werden. Je höher die Ladung der Aktivierungsschicht bzw. der Partikel wird und ist, desto mehr Partikel und desto haftfester können hierauf die Partikel der nächsten Schicht aufgebracht werden. Diese Partikelschichten sind dann üblicherweise auch umso spülfester.

Bei dem erfindungsgemäßen Verfahren kann/können das Aktivierungsmittel, die Aktivierungsschicht, die Partikel enthaltende Zusammensetzung oder/und die Partikel bei Bedarf elektrisch positiv oder negativ geladen sein oder/und werden. Sie wirken entsprechend kationisch oder anionisch.

Besonders bevorzugt wird/werden die Aktivierungsschicht oder die Partikel der letzten Partikelschicht insbesondere mit einer positiv bzw. negativ beladbaren oder/und positiv bzw. negativ geladenen Flüssigkeit oder/und mit positiven bzw. negativen elektrischen Ladungen eines Gases oder im Vakuum beladen (= positive bzw. negative Beladung). Entsprechendes gilt für die Verstärkung einer positiv bzw. negativ geladenen Aktivierungsschicht oder die Partikel der letzten Partikelschicht.

Kationische Aktivierungsmittel enthalten mindestens eine kationische Substanz, anionische Aktivierungsmittel enthalten mindestens eine anionische Substanz.

Insbesondere kann eine kationische Aktivierungsschicht oder/und können kationisch geladene Partikel z.B. mit oder/und in einer sauren wässerigen Flüssigkeit wie z.B. einer Lösung oder Dispersion zusätzlich stärker elektrisch positiv geladen werden. Dies erfolgt vorzugsweise bei einem pH-Wert im Bereich von 1 bis 7,5, besonders bevorzugt bei einem pH-Wert im Bereich von 1,5 bis 7, von 2,5 bis 6 oder von 3,5 bis 5, z.B. mit einer wässerigen Säure oder/und Kationen enthaltenden Lösung oder Dispersion.

Insbesondere kann eine anionische Aktivierungsschicht oder/und können anionisch geladene Partikel mit oder/und in einer basischen wässerigen Flüssigkeit wie z.B. einer Lösung oder Dispersion zusätzlich stärker elektrisch negativ geladen werden. Dies erfolgt vorzugsweise mit einer wässerigen Flüssigkeit bei einem pH-Wert im Bereich von 7 bis 14, besonders bevorzugt bei einem pH-Wert im Bereich von 8,5 bis 13, von 9,5 bis 12 oder von 10 bis 11, z.B. mit einer wässerigen Hydroxid enthaltenden Lösung oder Dispersion.

Die positive Beladung eines Aktivierungsmittels, einer Aktivierungsschicht, einer Partikel enthaltenden Zusammensetzung oder/und von Partikeln kann vorzugsweise durch Behandeln mit ionisiertem Gas, durch saures Beizen mit einem Beizfluid (Gas, Lösung, Dispersion oder/und Paste), Behandeln mit einer Protonen oder/und Kationen tragenden Flüssigkeit oder/und durch ein Behandeln z.B. mit mindestens einer Säure zur positiven Beladung erfolgen. Besonders bevorzugt ist eine positive Beladung durch wässerige Lösungen von Säuren bzw. mit reaktiven Lösungen von Substanzen wie z. B. bei quaternären Ammoniumverbindungen, die kationische Gruppen tragen.

Bei dem erfindungsgemäßen Verfahren erfolgt die positive Beladung einer Aktivierungsschicht oder von Partikeln der Partikelschicht vorzugsweise durch Behandeln mit mindestens einer Säure oder/und mit mindestens einer Substanz, die kationische Gruppen trägt, oder die negative Beladung einer Aktivierungsschicht oder von Partikeln der Partikelschicht vorzugsweise durch Behandeln mit mindestens einem Anion oder/und mit mindestens einer Substanz, die anionische Gruppen trägt.

Bei dem erfindungsgemäßen Verfahren erfolgt die Herstellung und Aktivierung der kationischen Aktivierungsschicht oder die Kontaktierung und Aktivierung von Partikeln der Partikelschicht vorzugsweise mit mindestens einer kationischen Siliciumverbindung oder/und die positive Beladung der Aktivierungsschicht oder von Partikeln der Partikelschicht vorzugsweise durch Behandeln mit mindestens einer Säure oder/und mit kationischen Gruppen.

Bei dem erfindungsgemäßen Verfahren können als elektrostatisch wirksame Substanzen eines Aktivierungsmittels die unterschiedlichsten Substanzen verwendet werden.

Vorzugsweise wird für eine positive Aktivierung oder/und für eine positive Beladung zusätzlich mindestens eine Behandlung mit Protonen insbesondere von mindestens einer Säure oder/und mit Kationen wie z.B. von Metallkationen oder/und Ammoniumionen einschließlich kationischen Verbindungen wie z.B. von mindestens einer quaternären Ammoniumverbindung, von mindestens einem Komplexbildner wie z. B. dem Häm-Komplex (Fe²⁺) oder/und von mindestens einer wasserlöslichen kationischen Silicium-haltigen Verbindung wie z.B. mindestens einem Silan/Silanol/Siloxan/Polysiloxan/Silazan/Polysilazan insbesondere mit jeweils mindestens einer Stickstoff enthaltenden Gruppe verwendet.

Für kationische Aktivierungsmittel sind Verbindungen mit mindestens einer Stickstoff enthaltenden Gruppe oder/und Säuren geeignet. Für kationische Aktivierungsmittel hat sich beispielsweise der Gehalt von mindestens einer kationischen Substanz bewährt wie z.B. mindestens einem Silan oder/und mindestens einer hierzu andersartigen Verbindung, das/die mindestens eine Stickstoff-haltige Gruppe wie z.B. Amino-, Imino-, Amido- oder/und Imidogruppe aufweist. Darüber hinaus sind auch viele Ammoniumverbindungen oder/und Säuren vorteilhaft.

Die Beschichtung mit einem Aktivierungsmittel, das z.B. mindestens eine protonierte Verbindung wie z.B. mindestens ein protoniertes Silan enthält, funktionalisiert die Oberfläche und lädt sie positiv auf.

Bei dem erfindungsgemäßen Verfahren erfolgt die Herstellung und Aktivierung der anionischen Aktivierungsschicht oder die Kontaktierung und Aktivierung von Partikeln der Partikelschicht vorzugsweise mit mindestens einer anionischen Verbindung oder/und die negative Beladung der Aktivierungsschicht oder von Partikeln der Partikelschicht vorzugsweise durch Behandeln mit mindestens einem Anion oder/und mit mindestens einer anionischen Verbindung.

Als anionische Substanzen in anionischen Aktivierungsmitteln, zur negativen Beladung oder/und zu ihrer Verstärkung eignen sich hierbei insbesondere a) Substanzen mit Gruppen von Borat, Carbonat, Carboxylat, Halogenid wie z.B. Chlorid oder/und Fluorid, Hydroxid, Phosphat, Phosphonat, Sulfat oder/ und Sulfonat, b) negativ geladene Komplexe oder/und deren Ester. Unter den Carboxylatgruppen sind Carboxylatgruppen von beliebigen Carbonsäuren möglich. Für anionische Aktivierungsmittel hat sich beispielsweise c) der Gehalt von mindestens einem anionischen organischen Polymer bewährt wie z.B. auf Basis von Polyacrylsäure, Polyphosphonsäure, Polyvinylphosphorsäure, Polyvinylphosphorsäureester oder/und deren Derivaten.

Die negative Beladung eines Aktivierungsmittels, einer Aktivierungsschicht, einer Partikel enthaltenden Zusammensetzung oder/und von Partikeln der letzten Partikelschicht kann vorzugsweise durch Bestrahlen mit beta-Strahlung (Elektronen), durch Behandeln mit ionisiertem Gas, durch Kontaktieren mit einer Flüssigkeit wie z.B. mit einer alkalischen Reinigerflüssigkeit, mit einer alkalischen Beize oder/und durch ein Vorbehandeln mit mindestens einer negativ geladenen Substanz. Besonders bevorzugt ist eine negative Beladung mit Anionen und insbesondere durch Anionen tragende wässerige Lösungen wie z.B. von Lösungen mit mindestens einem Metallhydroxid wie z. B. Natriumhydroxid, Kaliumhydroxid oder/und mit einer organischen Alkalimetallverbindung. Besonders bevorzugt ist/sind hierbei eine Lösung, eine Dispersion oder/und ein Gas mit mindestens einer basischen Substanz wie z.B. mit mindestens einem anionischen Aktivierungsmittel, insbesondere mit einer Lauge z.B. auf Basis von KOH oder/und NaOH oder/und z.B. mit jeweils mindestens einem Phosphonat, Phosphorsäureester oder/und Sulfonat.

Die positive oder negative Beladung kann verstärkt werden, wenn die geladene Aktivierungsschicht oder die geladenen Partikel der letzten Partikelschicht mit mindestens einer entsprechend geladenen Substanz in Kontakt kommt/kommen, was zu einer noch stärkeren positiven oder negativen Ladung führt.

Besonders bevorzugt werden die zu beschichtenden Oberflächen, die Partikel der Partikel enthaltenden Zusammensetzung öder die Partikel der letzten Partikelschicht insbesondere mit einer negativ geladenen oder/und negativ beladbaren Flüssigkeit oder/und mit ionisierten Ladungen negativ geladen, insbesondere in einer alkalischen wässerigen Flüssigkeit. Entsprechendes gilt für die Verstärkung einer negativen Beladung.

Die negative Beladung eines Aktivierungsmittels, einer Aktivierungsschicht, einer Partikel enthaltenden Zusammensetzung oder/und von Partikeln kann verstärkt werden, wenn vorzugsweise zusätzlich mindestens eine Behandlung nach dem Funktionalisieren der Oberfläche mit gleichartigen Ladungen, wie sie schon aufgebracht sind, ausgeführt wird, indem vorzugsweise zusätzlich mindestens eine alkalische Behandlung mit ionisiertem Gas, mit einer Reinigerflüssigkeit oder/und durch alkalisches Beizen ausgeführt wird. Besonders bevorzugt ist eine zusätzliche negative Beladung mit einer wässerigen Lösung von mindestens einem Metallhydroxid wie z. B. Natrium- oder/und Kaliumhydroxid.

Die mindestens eine aktivierende oder/und aktivierbare Substanz kann in dem Aktivierungsmittel oder in einer Flüssigkeit zur negativen Beladung vorzugsweise in einer Konzentration im Bereich von 0,01 bis 200 g/L, von 0,1 bis 120 g/L, von 0,5 bis 70 g/L, von 1 bis 30 g/L oder von 2 bis 10 g/L enthalten sein. Oft ist es so, dass die mindestens eine hierbei aktive Substanz gleichzeitig teilweise aktiviert ist und noch etwas aktivierbar ist.

Besonders vorteilhaft oder/und für bestimmte industrielle Verfahrensabläufe und Anlagen besonders geeignet ist es, wenn eine spülfeste Aktivierungsschicht ausgebildet wird.

Bei dem erfindungsgemäßen Verfahren wird vorzugsweise eine spülfeste Aktivierungsschicht mit der mindestens einen aktivierenden oder/und aktivierbaren Substanz im Aktivierungsmittel ausgebildet.

Besonders vorteilhaft oder/und für bestimmte industrielle Verfahrensabläufe und Anlagen besonders geeignet ist es, wenn eine oder wenn jeweils eine spülfeste Schicht aus Partikeln ausgebildet wird.

Da in Vertiefungen komplex geformter zu beschichtender Substrate wie z.B. Karosserien im Automobilbau ein flüssiges Mittel wie z.B. ein Aktivierungsmittel oder wie z.B. eine Partikel enthaltende Zusammensetzung nach der Beschichtung gegebenenfalls nicht vollständig abfließt, kann es ohne nachfolgenden Spülschritt z.B. mit einer Wasserspülung zu einer Anhäufung des Aktivierungsmittels und zu übermäßig dicken Beschichtungen in diesen Vertiefungen und zu Spritzern kommen, die zu Ungleichmäßigkeiten und Lackfehlern führen können. Deswegen werden die mit einem Aktivierungsmittel oder/und mit einer Partikel enthaltenden Zusammensetzung beschichteten Substrate vorzugsweise gespült. Hierbei wird insbesondere deionisiertes Wasser verwendet. Bei der Spülung der mit Aktivierungsmittel beschichteten Substrate soll die Aktivierungsschicht bzw. die Partikelschicht möglichst wenig entfernt werden und darf nicht vollständig entfernt werden. Daher muss die Aktivierungsschicht bzw. die Partikelschicht für derartige Anlagen und Verfahrensabfolgen ausreichend spülfest sein.

Da bei einem Spülvorgang oft ein Teil der frischen Beschichtung abgespült wird, ist es vorteilhaft, die restlichen Gehalte der Aktivierungsschicht z.B. an Elementen durch Röntgenfluoreszenzanalyse (RFA) zu überprüfen. Es erwies sich als vorteilhaft, wenn beim Spülen ein möglichst hoher Anteil der Aktivierungsschicht erhalten blieb, da sich in manchen Ausführungsvarianten die Abscheidungsdichte und die Abscheidungsgeschwindigkeit in etwa proportional mit der Stärke der Aktivierungsschicht verbessert.

Bei dem erfindungsgemäßen Verfahren kann ein Spülen der Aktivierungsschicht oder/und der Partikelschicht vorzugsweise mit einer fließenden oder/und in einer strömenden wässerigen Spülflüssigkeit z.B. durch Abspülen, Spritzspülen oder/und Tauchspülen erfolgen. Das Spülen kann insbesondere als Tauchspülen insbesondere durch Tauchen in ein bewegtes Bad, als Spritzspülen z.B. durch Spritzen auf die zu spülende Oberfläche oder/und durch Abspülen der zu spülenden Oberfläche erfolgen. Bei jedem Spülen kann bei Bedarf mehrfach gespült werden, z.B. mindestens einmal mit deionisiertem Wasser, danach mindestens einmal mit einer weniger stark gereinigten Wasserqualität oder/und mit einer Nachspülflüssigkeit.

Die restlichen Gehalte der Aktivierungsschicht, die nach einem Spülen mit insbesondere deionisiertem Wasser erhalten sind, verdeutlichen, dass trotz intensiven Spülens üblicherweise ausreichend hohe Gehalte der Aktivierungsschicht erhalten bleiben. Diese Gehalte genügen, um die aktivierte Oberfläche für die nachfolgenden Behandlungsschritte wirksam vorzubereiten.

Bei der Aufbringung eines kationischen oder anionischen Aktivierungsmittels kann es in vielen Ausführungsvarianten vorteilhaft sein, darauf zu achten, dass die entstehende Beschichtung spülfest wird oder/und ist. Darüber hinaus ist bei einem anionischen Aktivierungsmittel oft darauf zu achten, dass die Beschichtung auch gleichmäßig aufgebracht wird oder/und ist oder/und dass das aufgebrachte Aktivierungsmittel hydrolysestabil ist.

Als besonders bevorzugte Substanzen für ein kationisches Aktivierungsmittel hat sich der Einsatz von mindestens einem, von mindestens zwei oder von mindestens drei verschiedenen Silanen als förderlich erwiesen. Sie ermöglichen nicht nur einen erhöhten Korrosionsschutz und eine erhöhte Haftung der nachfolgenden Schicht bzw. Beschichtung, sondern auch eine gute Beladung mit Protonen oder/und Kationen. Außerdem haben sich kationische Aktivierungsmittel besonders für homogene Partikelverteilungen der anschließend abgeschiedenen Partikel besonders bewährt.

Der Begriff "Silan" wird hierbei für Silane, Silanole, Siloxane, Polysiloxane, deren Reaktionsprodukte oder/und Derivate benutzt, die dabei auch oft "Silan"-Gemische sind. Aufgrund der vielfältigen chemischen Reaktionen kann aus einem, aus zwei, drei, vier, fünf oder mehr Silanen eine Vielzahl an Reaktionsprodukten und deren Derivaten entstehen. Der Begriff "Kondensieren" im Sinne dieser Anmeldung bezeichnet alle Formen der Vernetzung, der Weitervernetzung und der weiteren chemischen Reaktionen der Silane/Silanole/Siloxane/Polysiloxane.

Der Begriff "Aktivierungsschicht" im Sinne dieser Anmeldung bezieht sich auf die mit dem wässerigen Aktivierungsmittel ausgebildete Beschichtung einschließlich des Nassfilms, des angetrockneten Films, des durchgetrockneten Films, des bei erhöhter Temperatur getrockneten Films und des gegebenenfalls thermisch oder/und durch Bestrahlung weiter vernetzten Films.

Die mindestens eine aktivierende Substanz und insbesondere das mindestens eine Silan in einem kationischen Aktivierungsmittel kann in dem kationischen bzw. anionischen Aktivierungsmittel vorzugsweise in einer Konzentration im Bereich von 0,01 bis 100 g/L, von 0,1 bis 70 g/L, von 0,5 bis 40 g/L, von 1 bis 25 g/L, von 1,5 bis 12 g/L oder von 2 bis 6 g/L enthalten sein.

Bei dem erfindungsgemäßen Verfahren kann/können als Siliciumverbindung vorzugsweise mindestens ein hydrolisierbares oder/und mindestens ein zumindest teilweise hydrolysiertes Silan enthalten sein. Es kann vorzugsweise mindestens ein Mono-silyl-silan, mindestens ein Bis-silyl-silan oder/und mindestens ein Tris-silyl-silan enthalten sein. Hierbei sind insbesondere Silane bevorzugt, die im sauren Medium protoniert vorliegen (kationisches Silan). Es kann vorzugsweise mindestens ein Aminosilan, mindestens ein Silan mit mindestens zwei Stickstoff enthaltenden Gruppen wie z.B. jeweils mindestens eine Amidogruppe, Aminogruppe, Harnstoffgruppe, Imidogruppe oder/und Iminogruppe oder/und eine Mischung aus mindestens zwei verschiedenen im sauren Medium protonierten Silanen enthalten sein. Bevorzugt sind dabei insbesondere solche Silane/Siloxane, die eine Kettenlänge im Bereich von 2 bis 5 C-Atomen und eine funktionelle Gruppe aufweisen, wobei letztere vorzugsweise zur Reaktion mit Polymeren geeignet sein kann, sowie verzweigte Silane.

Vorzugsweise enthält das wässerige Aktivierungsmittel mindestens ein Silan ausgewählt aus der Gruppe von
Aminoalkylaminoalkylalkyldialkoxysilan,
Alpha-Aminoalkyliminoalkyltrialkoxysilan
Bis-(trialkoxysilylalkyl)amin,
Bis-(trialkoxysilyl)ethan,
Aminoalkyltrialkoxysilan,
Ureidoalkyltrialkoxysilan,
N-(trialkoxysilylalkyl)alkylendiamin,
N-(aminoalkyl)aminoalkyltrialkoxysilan,
N-(trialkoxysilylalkyl)dialkylentriamin,
Poly(aminoalkyl)alkyldialkoxysilan und
Ureidoalkyltrialkoxysilan.

Vorzugsweise enthält die wässerige Aktivierungsmittel mindestens ein Silan ausgewählt aus der Gruppe von
Alpha-aminoethyliminopropyltrimethoxysilan,
Aminoethylaminopropylmethyldiethoxysilan,
Aminoethylaminopropylmethyldimethoxysilan,
Bis(triethoxysilylpropyl)amin,
Bis(trimethoxysilylpropyl)amin,
Gamma-Aminopropyltriethoxysilan,
Gamma-Aminopropyltrimethoxysilan,
Gamma-Ureidopropyltrialkoxysilan,
N-(3-(trimethoxysilyl)propyl)ethylendiamin,
N-beta-(aminoethyl)-gamma-aminopropyltriethoxysilan,
N-beta-(aminoethyl)-gamma-aminopropyltrimethoxysilan,
N-(gamma-triethoxysilylpropyl)diethylentriamin,
N-(gamma-trimethoxysilylpropyl)diethylentriamin,
N-(gamma-triethoxysilylpropyl)dimethylentriamin,
N-(gamma-trimethoxysilylpropyl)dimethylentriamin,
Poly(aminoalkyl)ethyldialkoxysilan und
Poly(aminoalkyl)methyldialkoxysilan.

Besonders bevorzugte Siliciumverbindungen sind Bis(3-trimethoxysilylpropyl)amin, Bis(3-triethoxysilylpropyl)amin, 3-Aminopropyltriethoxysilan, Bis-(triethoxysilyl)ethan, Phenylaminopropyltrimethoxysilan und Triaminoorganofunktionelles Silan wie z.B. 3,5,7-Triamino-trimethoxysilan.

Besonders bevorzugt sind Gehalte an mindestens einer Säure und an mindestens einem kationischen Silan. In besonders bevorzugten Ausführungsformen enthält das Silan/Silanol/Siloxan/Polysiloxan enthaltende wässerige Aktivierungsmittel a) mindestens eine Verbindung ausgewählt aus Silanen, Silanolen, Siloxanen und Polysiloxanen, b) mindestens eine Titan-, Hafnium- oder/urid Zirkonium-haltige Verbindung, gegebenenfalls c) mindestens eine Art Kationen ausgewählt aus Kationen von Metallen der 1. bis 3. und 5. bis 8. Nebengruppe einschließlich Lanthaniden und der 2. Hauptgruppe des Periodensystems der Elemente oder/und mindestens eine entsprechende Verbindung sowie gegebenenfalls mindestens eine Substanz d) enthält ausgewählt aus: d₁) Silicium-freien Verbindungen mit mindestens einer Stickstoff enthaltenden Gruppe wie z.B. mit jeweils mindestens einer Amino-, Harnstoff- oder/und Iminogruppe oder/und aus mehreren Amino-Gruppen oder/und mit mindestens einer Nitro-Gruppe, d₂) Anionen von Nitrit, d₃) Verbindungen auf Basis von Peroxid und d₄) Phosphor-haltigen Verbindungen, Anionen von mindestens einem Phosphat oder/und Anionen von mindestens einem Phosphonat sowie außerdem e) Wasser und f) gegebenenfalls auch mindestens ein organisches Lösemittel. Vorzugsweise kann das Aktivierungsmittel darüber hinaus in manchen Ausführungsformen auch jeweils mindestens ein organisches Polymer, mindestens ein Amin, mindestens eine Base, mindestens einen Komplexbildner, mindestens ein Tensid, mindestens eine Art anorganischer Partikel, mindestens einen Farbstoff, mindestens ein Additiv oder/und jeweils mindestens eine anorganische oder/und organische Säure oder/und mindestens eines ihrer Derivate enthalten.

In Vorversuchen hatte es sich als vorteilhaft erwiesen, wenn die frisch aufgebrachte und noch nicht getrocknete oder noch unvollständig getrocknete, noch unvollständig kondensierte oder/und noch unvollständig vernetzte Aktivierungsschicht mindestens einmal insbesondere mit deionisiertem Wasser gespült wird oder/und ohne stärkere Trocknung gleich mit einer organischen oder im Wesentlichen organischen Beschichtung beschichtet wird. Hierdurch ergaben sich deutlich bessere Reaktivitäten und deutlich bessere Schichteigenschaften. Das Spülen kann insbesondere als Tauchspülen insbesondere in einem bewegten Bad oder als Spritzspülen z.B. durch Spritzen erfolgen. Beim Spülen kann überschüssige Beschichtung, die nicht fest gebunden ist, abgespült werden.

Bei dem erfindungsgemäßen Verfahren ist es bevorzugt, dass nach einer Aktivierung der insbesondere metallischen Oberfläche mit mindestens einer wasserlöslichen Silicium-haltigen Verbindung vor oder/und nach dem Beschichten mit der Partikel enthaltenden Zusammensetzung und gegebenenfalls nach mindestens einem Spülen mit einer Spülflüssigkeit wie z.B. Wasser noch eine Auflage der entsprechenden Silicium-haltigen Verbindung mit einer Si-Auflage berechnet als Metall im Bereich von 2 bis 100 mg/m² bei einer Röntgenfluoreszenzanalyse nachweisbar ist.

Wenn ein Aktivierungsmittel Funktionalitäten aufweist, können die Funktionalitäten beispielsweise durch eine saure Behandlung noch stärker positiv geladen werden, um eine höhere und möglichst vollständige Beladung mit Protonen oder/und Kationen zu ermöglichen. So können beispielsweise die Amin-Funktionalitäten von Silanen der zuvor aufgebrachten Aktivierungsschicht durch die saure Behandlung stärker positiv geladen werden. Außerdem ermöglicht diese saure Behandlung die Verwendung von Silanen in dem Aktivierungsmittel in einem für die verwendeten Silane geeigneten pH-Wertbereich. Rasterelektronenmikroskopische Aufnahmen zeigten eine deutlich dichtere und gleichmäßigere Partikelabscheidung in der Partikelschicht an, wenn die Aktivierungsschicht zuvor beispielsweise durch eine saure Behandlung positiv geladen wurde.

Umgekehrt ist es ebenfalls möglich, eine anionische Aktivierungsschicht durch beispielsweise alkalische Behandlung noch stärker negativ zu laden. Bei anionisch geladenen Oberflächen können die Funktionalitäten insbesondere der gespülten anionisch geladenen Aktivierungsschicht bei Bedarf durch Behandeln mit einem basischen Aktivierungsmittel zur noch stärkeren negativen Beladung wie z.B. Ammoniak geladen werden, so dass z.B. über Bildung von NH₄⁺ z.B. COOH zu COO⁻ wird.

Danach können die entsprechend positiv oder negativ geladenen Oberflächen z.B. mit deionisiertem Wasser gespült werden, um überschüssige Säure bzw. kationische Substanz oder überschüssige alkalische Mittel sowie gegebenenfalls andere Substanzen und Verunreinigungen zu entfernen.

Auf die anionische oder kationische Aktivierungsschicht wird danach, gegebenenfalls nach einer anschließenden negativen Beladung oder positiven Beladung, eine Partikelschicht aufgebracht. Die Partikel sind hierbei vorzugsweise in einer wässerigen Dispersion, insbesondere in einer stabilen Dispersion, enthalten. Neben Wasser kann diese Zusammensetzung gegebenenfalls auch mindestens ein organisches Lösemittel enthalten, das die Partikel nicht oder nicht wesentlich anlöst. Die Partikel werden hierbei aus der wässerigen Zusammensetzung vorzugsweise vorwiegend oder nur aufgrund elektrostatischer Anziehung auf der Aktivierungsschicht aufgebracht und auf ihr anschliessend sowohl elektrostatisch oder/und mit einer Vielzahl von Wechselwirkungen wie z. B. van-der-Waals Kräften, Ausbildung kovalenter Bindungen oder/und Komplexbildungsreaktionen festgehalten.

Bei dem erfindungsgemäßen Verfahren können als Partikel der Partikel enthaltenden Zusammensetzung die unterschiedlichsten Partikelarten, Partikelgrößen und Partikelformen verwendet werden.

Vorzugsweise weisen die Partikel der Zusammensetzung eine mittlere Partikelgröße d₅₀ im Bereich von 10 nm bis 45 µm auf. Die Partikelgröße kann je nach Anforderungsprofil in weiten Grenzen variiert werden. Häufig wird die mittlere Partikelgröße d₅₀ im Bereich von 20 nm bis 100 nm, von 50 nm bis 180 nm, von 0,1 bis 10 µm oder/und von 5 bis 30 µm liegen. Hierbei kann es vorteilhaft sein, eine mittlere Partikelgröße der Partikel in der Art auszuwählen, dass aus einer einzelnen Schicht eine Beschichtung der gewünschten Schichtdicke ausgebildet werden kann. Selbst bei größeren Partikeln ist es bei geeigneter Stabilisierung möglich, gegebenenfalls unter größeren Aufwendungen, diese Partikel sowohl in einer Dispersion in der Schwebe zu halten, als auch elektrostatisch aufzuladen und auf einem Substrat mittels elektrostatischer Kräfte vorzugsweise ohne angelegtes äußeres elektrisches Feld abzuscheiden. Insbesondere bei geringen Partikelgrößen zeigen die Partikel der Zusammensetzung in manchen Ausführungsformen einen im Wesentlichen gleichen Durchmesser oder/und im Wesentlichen kugelähnliche Formen.

Die Partikel können in der Zusammensetzung besonders bevorzugt in einer Konzentration im Bereich von 0,1 bis 500 g/L, von 1 bis 250 g/L, von 5 bis 120 g/L oder von 10 bis 60 g/L vorliegen. Insbesondere wenn die Partikeldurchmesser der Partikel der Zusammensetzung in einer besonders breiten Verteilung oder/und bimodal oder multimodal verteilt vorliegen, können die kleineren Partikel hierbei Lücken und die Zwickel zwischen den größeren Partikeln zumindest teilweise schließen und gegebenenfalls besonders dichte Partikelschichten ausbilden. Hierzu können beispielsweise zwei oder drei verschiedene Dispersionen die miteinander kompatiblel sind, miteinander gemischt werden. Bevorzugt ist auch, dass die wässerige Partikel enthaltende Zusammensetzung einen pH-Wert im Bereich von 2 bis 13 aufweist, insbesondere im Bereich von 3,5 bis 12 oder von 5 bis 11, ganz besonders bevorzugt im Bereich von 7 bis 10 oder von 8 bis 9.

Als Partikel in der wässerigen Zusammensetzung oder/und in der hieraus gebildeten Partikelschicht können vorzugsweise Oxide, Hydroxide, Carbonate, Phosphate, Phosphosilicate, Silicate, Sulfate, organische Polymere, Wachse oder/und compoundierte Partikeln, insbesondere solche auf Basis von Korrosionsschutzpigmenten, organischen Polymeren, Wachsen oder/und compoundierten Partikeln, verwendet oder neben anderen Arten von Partikeln auch verwendet werden. Compoundierte Partikel weisen in einem Partikel ein Gemisch von mindestens zwei verschiedenen Substanzen auf. Compoundierte Partikel können oft andere Substanzen mit sehr unterschiedlichen Eigenschaften aufweisen. Sie können beispielsweise teilweise oder gänzlich die Zusammensetzung für einen Lack enthalten, gegebenenfalls sogar mit einem Gehalt an nichtpartikulär ausgebildeten Substanzen wie z.B. Tensid, Entschäumer, Dispergiermittel, Lackhilfsmittel, weitere Arten Additive, Farbstoff, Korrosionsinhibitor, schwach wasserlösliches Korrosionsschutzpigment oder/und andere Substanzen, die für entsprechende Mischungen üblich oder/und bekannt sind. Solche Lackbestandteile können beispielsweise für organische Beschichtungen zum Umformen, für Korrosionsschutzprimer und andere Primer, für Farblacke, Füller oder/und Klarlacke geeignet oder/und häufig genutzt sein. Ein Korrosionsschutzprimer weist üblicherweise elektrisch leitfähige Partikel auf und ist elektrisch schweißbar. Generell ist es hierbei vielfach bevorzugt, dass a) ein Gemisch chemisch oder/und physikalisch verschiedenartiger Partikel, b) Partikel, Aggregate oder/und Agglomerate aus chemisch oder/und physikalisch verschiedenartigen Partikeln oder/und c) compoundierte Partikel in der Zusammensetzung oder/und in der hieraus gebildeten Partikelschicht verwendet werden.

Vielfach ist es bevorzugt, dass die Partikel enthaltende Zusammensetzung oder/und die hieraus gebildete Partikelschicht neben mindestens einer Art von Partikeln auch mindestens eine nicht-partikuläre Substanz enthält/enthalten, insbesondere Additive, Farbstoffe, Korrosionsinhibitoren oder/und schwach wasserlösliche Korrosionsschutzpigmente. Andererseits ist es in manchen Ausführungsformen bevorzugt, dass die Zusammensetzung oder/und die hieraus gebildete Beschichtung neben mindestens einer Art von organischen Partikeln auch mindestens eine nicht-partikuläre Silicium enthaltende Substanz enthält/enthalten, insbesondere jeweils mindestens ein Silan/Silanol/Siloxan/Polysiloxan/Silazan/Polysilazan.

Es können insbesondere als Partikel in der Zusammensetzung oder/und in der hieraus gebildeten Partikelschicht farbige oder/und gegebenenfalls auch ein begrenzter Anteil an elektrisch leitfähigen Partikeln insbesondere auf Basis von Fullerenen und anderen Kohlenstoffverbindungen mit Graphitähnlichen Strukturen oder/und Russ, gegebenenfalls auch Nanocontainer oder/und Nanoröhren enthalten sein. Andererseits können hierbei insbesondere als Partikel in der Zusammensetzung oder/und in der hieraus gebildeten Beschichtung beschichtete Partikel, chemisch oder/und physikalisch modifizierte Partikel, Kern-Schale-Partikel, compoundierte Partikel aus verschiedenartigen Substanzen, verkapselte Partikel oder/und Nanocontainer verwendet werden.

Bei dem erfindungsgemäßen Verfahren können als Partikel in der Partikel enthaltenden Zusammensetzung, in der Partikelschicht oder/und in der hieraus gebildeten Beschichtung organische Polymere insbesondere auf Basis von Aminoplast, Epoxid, Ethylenacrylat, Alkyl(meth)acrylat, Polyethylen, Polyisobutylen, Polyacrylonitril, Polyvinylchlorid, Poly(meth)acrylat, Polyalkyl(meth)acrylat wie z.B. Polymethylmethacrylat, Polyvinylacetat, Polyvinylalkohol, Polyvinylidenchlorid, Polytetrafluorethylen, Polyisopren, Polypropylen, Poly(meth)acrylat, Polyester, Polyether, Polyurethan, Phenolharz, Alkydharz, Polycarbonat, Polyamid, Polystyrol, Polysulfid, Polysiloxan, Polyvinylacetal, Polyacetal, Styrolacrylat, deren Derivaten, deren Compoundierungen oder/und deren Gemischen verwendet werden.

Als Zusätze zu den organischen Polymeren der Partikel empfehlen sich in vielen Ausführungsformen Pigmente oder/und Additive, wie sie in Lacken und Primern häufig verwendet werden.

Bei dem erfindungsgemäßen Verfahren ist es bevorzugt, dass die Partikel enthaltende Zusammensetzung, die hieraus gebildete Partikelschicht oder/und die hieraus z.B. durch Verfilmen oder/und Vernetzen gebildete Beschichtung neben mindestens einer Art von Partikeln auch jeweils mindestens einen Farbstoff, ein Farbpigment, ein Korrosionsschutzpigment, einen Korrosionsinhibitor, ein Leitfähigkeitspigment, eine weitere Art an Partikeln, ein Silan/Silanol/Siloxan/Polysiloxan/Silazan/Polysilazan, ein Lackadditiv oder/und ein Additiv wie z.B. jeweils mindestens ein Tensid, einen Entschäumer oder/und ein Dispergiermittel, enthält/enthalten.

Bei dem erfindungsgemäßen Verfahren ist es bevorzugt, dass die Zusammensetzung oder/und die hieraus gebildete Beschichtung neben mindestens einer Art von Partikeln und gegebenenfalls neben mindestens einer nichtpartikulären Substanz teilweise oder vollständig eine chemische Zusammensetzung für einen Primer, einen Lack wie beispielsweise für einen Füller, Decklack oder/und Klarlack aufweist.

Vorzugsweise weist die Partikel enthaltende Zusammensetzung eine Viskosität im Bereich von 1 bis 10.000 mPa·s gemessen mit einem Rotationsviskosimeter Modular Compact Rheometer Physica MCR 300 der Fa. Paar Physica gemäß DIN EN ISO 3219 auf. Besonders bevorzugt weist sie eine Viskosität im Bereich von 4 bis 5000 oder von 8 bis 1200 mPa·s, ganz besonders bevorzugt im Bereich von 15 bis 800, von 20 bis 450, von 40 bis 350 oder von 60 bis 250 mPa·s auf.

Bei dem erfindungsgemäßen Verfahren kann die Partikel enthaltende Zusammensetzung vorzugsweise ein zeta-Potenzial im Bereich von - 200 bis + 200 mV aufweisen, gemessen bei den pH-Werten einer stabilen Dispersion. Besonders bevorzugt weist sie ein zeta-Potenzial im Bereich von -150 bis + 150 oder von -100 bis + 100 mV auf, ganz besonders bevorzugt im Bereich von - 80 bis + 40 mV. Das zeta-Potenzial charakterisiert die Oberflächenladung der Partikel. Diese Eigenschaft wurde mit einem Zetasizer Nano ZS der Firma Malvern Instruments Ltd. gemessen. Hierbei wurden die pH-Werte und Bedingungen gewählt, bei denen die Dispersion (= Suspension oder/und Emulsion) stabil ist, das heißt, über längere Zeit in einer wässerigen Flüssigkeit nicht ausflockt oder/und nicht stärker koaguliert. Wenn das zetaPotenzial zu hoch ist, kann es passieren, dass die Partikel in der Partikelschicht aufgrund der Abstoßungskräfte auf Abstand gehalten werden und keine dichte Partikelpackung ausbilden können. Wenn das zeta-Potenzial zu niedrig ist, kann es passieren, dass die Partikel nicht ausreichend von der aktivierten Oberfläche angezogen werden und dass keine ausreichende Belegung erzielt wird.

Der pH-Wert dieser Zusammensetzung kann in weiten Grenzen schwanken bzw. an die geeigneten pH-Werte angepasst werden. Die Beschichtung kann bei Temperaturen insbesondere zwischen 5 und 95 °C erfolgen, vorzugsweise bei Raumtemperatur. oder bei Temperaturen zwischen 15 und 50 °C.

Die Beschichtung mit der Partikel enthaltenden Zusammensetzung kann durch jede Art der Applikation erfolgen, insbesondere beispielsweise durch Spritzen, Tauchen, Aufwalzen usw.. Die Beschichtung kann insbesondere mit einer Dispersion erfolgen, die zu der Aktivierungsschicht entgegen gesetzt geladene Partikel enthält.

Bei dem erfindungsgemäßen Verfahren ist es in manchen Ausführungsformen bevorzugt, dass bei jeweils einem Beschichtungsschritt mit der Partikel enthaltenden Zusammensetzung unabhängig von dem weiteren Andauern des Beschichtens jeweils eine Beschichtung mit einer mittleren Dicke von ein bis zehn oder von ein bis fünf Partikelschichten bzw. von ein bis zehn oder von ein bis fünf mittleren Partikelgrößen auf den zu beschichtenden Oberflächen ausgebildet wird. Oft ist dieses Beschichtungsverfahren ein selbstregulierendes Verfahren, so dass nur für eine gewisse Zeit und z.B. entsprechend den elektrostatischen Kräften eine Beschichtung ausgebildet wird - unabhängig davon, wie lange der Kontakt mit der Partikel enthaltenden Zusammensetzung andauert.

Vorzugsweise wird bei dem erfindungsgemäßen Verfahren in manchen Ausführungsformen im Wesentlichen nur etwa eine Monolage der Partikel auf der insbesondere metallischen Oberfläche oder auf der gegebenenfalls vorbeschichteten insbesondere metallischen Oberfläche ausgebildet. In anderen Ausführungsformen wird eine Partikelschicht ausgebildet, die nicht vollkommen geschlossen ist, die aber ausreicht, um noch eine im Wesentlichen geschlossene oder geschlossene Beschichtung aus der Partikelschicht zu erzeugen. In wiederum anderen Ausführungsformen wird eine Schicht von Partikeln abgeschieden, die insbesonders eine mittlere Dicke von ein bis beispielsweise zehn mittleren Partikelgrößen aufweist.

In vielen Ausführungsformen liegt die Partikeldichte auf den beschichteten Oberflächen in der Größenordnung von etwa 2x10¹⁰ Partikeln pro mm² (insbesondere bei Partikeldurchmessern in der Größenordnung von in etwa 10 nm - bei 1 Schicht), von etwa 2x10¹¹ Partikeln pro mm² (insbesondere bei Partikeldurchmessern in der Größenordnung von in etwa 10 nm - bei in etwa 5 Schichten),
in der Größenordnung von etwa 2x10⁸ Partikeln pro mm² (insbesondere bei Partikeldurchmessern in der Größenordnung von in etwa 100 nm - bei 1 Schicht), von etwa 2x10⁹ Partikeln pro mm² (insbesondere bei Partikeldurchmessern in der Größenordnung von in etwa 100 nm - bei in etwa 5 Schichten),
in der Größenordnung von etwa 2x10⁶ Partikeln pro mm² (insbesondere bei Partikeldurchmessern in der Größenordnung von in etwa 1 µm - bei 1 Schicht), von etwa 2x10⁷ Partikeln pro mm² (insbesondere bei Partikeldurchmessern in der Größenordnung von in etwa 1 µm - bei in etwa 5 Schichten),
in der Größenordnung von etwa 2x10⁴ Partikeln pro mm² (insbesondere bei Partikeldurchmessern in der Größenordnung von in etwa 10 µm - bei 1 Schicht), von etwa 2x10⁵ Partikeln pro mm² (insbesondere bei Partikeldurchmessern in der Größenordnung von in etwa 10 µm - bei in etwa 5 Schichten),
in der Größenordnung von etwa 750 Partikeln pro mm² (insbesondere bei Partikeldurchmessern in der Größenordnung von in etwa 40 µm - bei 1 Schicht) bzw. von etwa 7500 Partikeln pro mm² (insbesondere bei Partikeldurchmessern in der Größenordnung von in etwa 40 µm - bei in etwa 5 Schichten).

Vielfach ist die Partikeldichte auf den beschichteten Oberflächen so hoch, dass aus den Partikeln eine im Wesentlichen geschlossene oder eine geschlossene Beschichtung ausgebildet wird. Hierbei wird oft auch über die Spitzen und Täler der rauen insbesondere metallischen Oberfläche eine im Wesentlichen geschlossene oder sogar eine geschlossene Beschichtung ausgebildet. Hierbei ist der Bedeckungsgrad der insbesondere metallischen Oberfläche, der an AFM-Aufnahmen der Rasterkraftmikroskopie oder an REM-Aufnahmen ermittelt werden kann, vorzugsweise bei mindestens 95 %, bei mindestens 98 % oder bei mindestens 99 %.

Bei dem erfindungsgemäßen Verfahren ist es bevorzugt, dass eine Schicht hoher Partikeldichte mit der Partikel enthaltenden Zusammensetzung ausgebildet wird. Besonders bevorzugt ist es, dass dabei eine spülfeste Schicht hoher Partikeldichte mit der Partikel enthaltenden Zusammensetzung ausgebildet wird.

In Vorversuchen hatte es sich als vorteilhaft erwiesen, wenn die frisch aufgebrachte und noch nicht stärker getrocknete Aktivierungsschicht mindestens einmal insbesondere mit deionisiertem Wasser gespült wurde oder/und ohne stärkere Trocknung gleich mit Partikeln, insbesondere mit organischen oder im Wesentlichen organischen Partikeln, beschichtet wurde. Hierdurch ergaben sich deutlich besser geschlossene Schichten und deutlich höhere Partikeldichten. Das Spülen kann insbesondere als Tauchspülen insbesondere in einem bewegten Bad oder als Spritzspülen z.B. durch Spritzen erfolgen.

Das Spülen nach der Partikelbeschichtung dient dazu, um nicht elektrostatisch gebundene Partikel und Anhäufungen wie z.B. Läufer zu entfernen und den Verfahrensgang wie vielfach in der Automobilindustrie üblich so realitätsnah wie möglich zu gestalten. Denn in der Automobilindustrie erfolgt oft ein Spülen mit Wasser, entweder durch ein Tauchspülen oder durch ein Spritzspülen.

Falls die Partikelschicht nach ihrem Aufbringen gespült wird, ist es bevorzugt, dass die Partikel in der Partikelschicht so spülfest gehalten werden, dass nach dem Spülen mit mindestens einer Spülflüssigkeit wie z.B. Wasser oder/und einer wässerigen Nachspülflüssigkeit im Wesentlichen mindestens eine Monolage aus Partikeln erhalten bleibt. Bei dem erfindungsgemäßen Verfahren ist es bevorzugt, dass die Partikel so spülfest auf der insbesondere metallischen Oberfläche haften, dass trotz einer Spülung mit mindestens einer Spülflüssigkeit wie z.B. Wasser oder/und einer wässerigen Nachspülflüssigkeit mit mindestens einer weiteren insbesondere gelösten Substanz im Wesentlichen mindestens eine Monolage aus Partikeln erhalten bleibt.

Das Spülen kann grundsätzlich in beliebiger Weise und Abfolge erfolgen. Bei jedem Spülen kann bei Bedarf mehrfach gespült werden, z.B. mindestens einmal mit deionisiertem Wasser. Bei Bedarf kann danach mindestens einmal mit einer weniger stark gereinigten Wasserqualität oder/und mit einer Nachspülflüssigkeit gespült werden. Gegebenenfalls wird zuerst mit Stadtwasser und danach mit entionisiertem Wasser gespült.

Die Nachspülflüssigkeit kann beispielsweise eine auf Basis einer wässerigen Lösung oder Dispersion mit jeweils mindestens einem Phosphat, einem Phosphonat, einem Silan/Silanol/Siloxan/Polysiloxan, einem organischen Polymer, einem Isocyanat, einem Isocyanurat, einem Melamin, mit mindestens einer Titanverbindung, mit mindestens einer Zirkoniumverbindung, mit mindestens einer Art von Partikeln, mit mindestens einem Lackadditiv oder/und mit mindestens einem sonstigen Additiv sein. Eine Nachspüllösung kann dazu beitragen, anschließend ein Vernetzungsmittel, einen korrosionsschützenden Zusatz, einen Haftvermittler, eine Versiegelungsschicht, eine Lücken und Zwickel verschließende Schutzschicht oder/und eine Beschichtung für eine Gradientenbeschichtung aufzubringen.

Bei dem erfindungsgemäßen Verfahren ist es bevorzugt, dass die entstandene Partikelschicht mit mindestens einer Spülflüssigkeit wie z.B. Wasser oder/und einer wässerigen Nachspülflüssigkeit gespült wird und danach vorzugsweise im getrockneten oder nicht stärker getrockneten Zustand mit mindestens einer organischen Zusammensetzung z.B. eines Primers oder/und Lacks beschichtet wird.

Vorzugsweise wird die mindestens eine Partikelschicht verfilmt oder/und vernetzt, um eine möglichst geschlossene und bei metallischem Untergrund auch korrosionsbeständige Beschichtung auszubilden. Das Verfilmen oder/und Vernetzen kann insbesondere beim Trocknen oder/und Erwärmen erfolgen. Die Vernetzung kann auch teilweise oder gänzlich durch radikalische Polymerisation oder/und zusätzlich durch eine z.B. thermische Nachvernetzung erfolgen. Die Vernetzungsprozesse sind grundsätzlich bekannt.

Eine Filmbildung lässt sich durch den Einsatz thermoplastischer Polymere oder/und durch Zusatz von Substanzen, die als temporäre Weichmacher dienen, verbessern. Filmbildungshilfsmittel wirken als spezifische Lösemittel, die die Oberfläche der Polymerteilchen erweichen und so deren Verschmelzung ermöglichen. Hierbei ist vorteilhaft, wenn diese Weichmacher einerseits ausreichend lange in der wässerigen Zusammensetzung bleiben, um sich auf die Polymerteilchen lange auswirken zu können, und danach verdampfen und somit aus dem Film entweichen.

Insbesondere vorteilhaft als Filmbildungshilfsmittel sind sogenannte langkettige Alkohole, insbesondere solche mit 4 bis 20 C-Atomen, wie ein Butandiol, ein Butylglykol, ein Butyldiglykol, ein Ethylenglykolether wie Ethylenglykolmonobutylether, Ethylenglykolmonoethylether, Ethylenglykolmonomethylether, Ethylglykolpropylether, Ethylenglykolhexylether, Diethylenglykolmethylether, Diethylenglykolethylether, Diethylenglykolbutylether, Diethylenglykolhexylether oder ein Polypropylenglykolether wie Propylenglykolmonomethylether, Dipropylenglykolmonomethylether, Tripropylenglykolmonomethylether, Propylenglykolmonobutylether, Dipropylenglykolmonobutylether, Tripropylenglykolmonobutylether, Propylenglykolmonopropylether, Dipropylenglykolmonopropylether, Tripropylenglykolmonopropylether, Propylenglykolphenylether, Trimethylpentandioldiisobutyrat, ein Polytetrahydrofuran, ein Polyetherpolyol oder/und ein Polyesterpolyol.

Eine Vernetzung kann beispielsweise mit bestimmten reaktiven Gruppen wie z.B. Isocyanat-, Isocyanurat- oder/und Melamin-gruppen erfolgen.

Vorzugsweise wird die Partikelschicht in einer Weise getrocknet, dass insbesondere vorhandene organische Polymerpartikel verfilmen können, so dass eine weitgehend oder vollständig homogene Beschichtung gebildet wird. Die Trockentemperaturen können dabei in manchen Ausführungsformen so hoch gewählt werden, dass die organischen polymeren Bestandteile vernetzen können.

Bei dem erfindungsgemäßen Verfahren ist es in etlichen Ausführungsformen bevorzugt, dass eine im Wesentlichen organische Partikel enthaltende Partikelschicht ausgebildet und beispielsweise beim Trocknen verfilmt oder/und vernetzt wird. Das Verfilmen erfolgt in manchen Ausführungsformen auch ohne Anwesenheit von Filmbildungshilfsmitteln. Hierbei können die Partikel der Beschichtung, insbesondere wenn sie vorwiegend oder gänzlich als organische Polymere vorliegen, vorzugsweise zu einem im Wesentlichen geschlossenen oder zu einer geschlossenen Beschichtung verfilmt werden, insbesondere beim Trocknen. Hierbei ist es oft bevorzugt, dass die Trocknungstemperatur einer Beschichtung, die vorwiegend oder gänzlich aus organischen Polymeren bestehen, so gewählt wird, dass eine im Wesentlichen geschlossene oder eine geschlossene Beschichtung gebildet wird. Bei Bedarf kann zum Verfilmen mindestens ein Filmbildungshilfsmittel zugesetzt werden, insbesondere auf Basis von mindestens einem langkettigen Alkohol. Bei Ausführungsformen mit mehreren Partikelschichten übereinander werden vorzugsweise erst alle Partikelschichten aufgebracht und danach gemeinsam verfilmt oder/und vernetzt

Hierbei ist es vielfach bevorzugt, dass das Trocknen, Verfilmen oder/und Vernetzen im Temperaturbereich von 5 bis 350 °C, von 8 bis 200 °C, von 10 bis 150 °C, von 12 bis 120 °C oder von 14 bis 95 °C erfolgt, besonders bevorzugt im Temperaturbereich von 16 bis 40 °C bezogen auf die Ofentemperatur oder/und bezogen auf Peak-Metal-Temperature (PMT). Der gewählte Temperaturbereich ist weitgehend von der Art und Menge der organischen und gegebenenfalls auch der anorganischen Bestandteile und gegebenenfalls auch von ihren Filmbildungstemperaturen oder/und Vernetzungstemperaturen abhängig.

Bei dem erfindungsgemäßen Verfahren ist es besonders bevorzugt, dass die entstandene Partikelschicht mit einer Spülflüssigkeit wie z.B. Wasser oder/und mindestens einer wässerigen Nachspülflüssigkeit gespült wird und danach im nassen, feuchten oder angetrockneten Zustand mit mindestens einer organischen Zusammensetzung eines Primers oder/und Lacks beschichtet wird oder/und mit weiteren Partikeln von entgegen gesetzter Ladung zu den Partikeln der zuvor aufgebrachten Partikelschicht beschichtet wird

Bei dem erfindungsgemäßen Verfahren ist es in besonderen Ausführungsformen bevorzugt, dass mindestens zwei Schichten aus Partikeln übereinander ausgebildet werden, insbesondere jeweils mit Schichten aus abwechselnd positiv und negativ geladenen Partikeln. Bei dem erfindungsgemäßen Verfahren ist es in besonderen Ausführungsformen bevorzugt, dass mindestens zwei Schichten und daraus mindestens zwei Beschichtungen übereinander aus mindestens zwei Partikelschichten ausgebildet werden oder diese Schichten teilweise oder vollständig in eine einzige, gegebenenfalls chemische oder/und physikalische Gradienten aufweisenden Beschichtung überführt werden, insbesondere jeweils aus Schichten aus abwechselnd positiv und negativ geladenen Partikeln. Bei solchen Wechsellagerungen kann die nachfolgende Partikelschicht entweder auf der Partikelschicht oder auf der aus den Partikeln gebildeten Beschichtung abgeschieden werden. Wenn die jeweilige aus den Partikeln hergestellte Beschichtung eine ausreichende Zahl an Ladungen aufweist oder/und wenn sie zusätzlich z.B. mit einer alkalischen oder sauren Behandlung wie bei der Verstärkung der Aktivierung noch stärker negativ oder positiv geladen wird, kann darauf eine nächste Schicht aus Partikeln elektrostatisch abgeschieden werden.

Vor dem Aufbringen von Partikeln ist es vorteilhaft, der Partikel enthaltenden Zusammensetzung mindestens eine Substanz mit anionischen oder mindestens eine Substanz mit kationischen Gruppen zuzusetzen, um die Partikel der Zusammensetzung mit Ladungen aufzuladen. Die hierfür bevorzugten Substanzen wurden bereits bei den Aktivierungsmitteln und bei den Verstärkungsmitteln genannt.

Üblicherweise ist es vorteilhaft, wenn die hierbei in verschiedenen Lagen übereinander abgeschiedenen Partikel abwechselnd anionisch und kationisch geladen sind oder/und werden, um die elektrostatische Anziehung zwischen den verschiedenen Schichten zu ermöglichen und um möglichst keine Störstellen und keine Trennschichten wie z.B. Ablösungen von Schichten, Abplatzungen, Klumpen, Phasenseparationen, Risse und Delaminationen in und zwischen den Beschichtungen zu erzeugen, gegebenenfalls auch um chemisch verträglich oder/und beim Filmbildungsprozess miteinander verträglich sein. Es kann dabei vorteilhaft sein, wenn sich die übereinander lagernden verschiedenen Partikelarten durch eine geeignete chemische Reaktion durch Erzeugen von kovalenten Bindungen wie Additions-, Kondensations- oder/und Substitutionsreaktionen wie z.B. bei Reaktionen zwischen einer Amingruppe mit einer Epoxygruppe oder zwischen einem alkoholischen Gruppe mit einer Carboxylgruppe durch Veresterung oder zwischen einer alkoholischen Gruppe oder/und Amingruppe mit einer Isocyanatgruppe oder/und blockierten Isocyanatgruppe aneinander binden.

Als Oberflächen können grundsätzlich Oberflächen von allen Arten von Werkstoffen - gegebenenfalls auch von mehreren verschiedenartigen Werkstoffen benachbart oder/und nacheinander im Prozeß - eingesetzt werden, insbesondere alle Arten von metallischen Werkstoffen. Unter den metallischen Werkstoffen sind grundsätzlich alle Arten von metallischen Werkstoffen möglich, insbesondere solche aus Aluminium, Eisen, Kupfer, Titan, Zink, Zinn oder/und Legierungen mit einem Gehalt an Aluminium, Eisen, Stahl, Kupfer, Magnesium, Nickel, Titan, Zink oder/und Zinn, wobei deren Einsatz auch benachbart oder/und nacheinander erfolgen kann. Die Werkstoffoberflächen können gegebenenfalls auch vorbeschichtet werden oder/und sein, beispielsweise mit Zink oder einer Aluminium oder/und Zink enthaltenden Legierung. Beispielsweise können Kunststoffgegenstände bereits mit einer metallischen Beschichtung versehen sein.

Als zu beschichtende Gegenstände können grundsätzlich alle Arten von Gegenständen eingesetzt werden, insbesondere solche aus mindestens einem metallischen Werkstoff oder/und mit mindestens einer metallischen Beschichtung. Besonders bevorzugte Gegenstände sind insbesondere Bänder (Coils), Bleche, Teile wie z.B. Kleinteile, gefügte Komponenten, kompliziert geformte Komponenten, Profile, Stäbe oder/und Drähte.

Bei einer vorherigen Vorbehandlung vor einer Aktivierung einer Oberfläche mit einem Aktivierungsmittel, das helfen soll, die Oberfläche elektrostatisch aufzuladen, können die zu behandelnden Oberflächen bei Bedarf zuerst alkalisch gereinigt und gegebenenfalls mit einer Zusammensetzung zur Vorbehandlung kontaktiert werden, letzteres insbesondere um eine Konversionsschicht auszubilden. Dann können die derart behandelten oder/und beschichteten Oberflächen gegebenenfalls mit einem Primer oder/und mit einer gegebenenfalls umformbaren Schutzschicht, insbesondere mit einem Korrosionsschutzprimer, beschichtet oder/und gegebenenfalls beölt werden. Die Beölung dient insbesondere dem vorübergehenden Schutz der behandelten oder/und beschichteten insbesondere metallischen Oberflächen.

Als Vorbehandlung ist grundsätzlich jede Art der Vorbehandlung möglich: Es können beispielsweise wässerige Vorbehandlungszusammensetzungen auf Basis von Phosphat, Phosphonat, Silan/Silanol/Siloxan/Polysiloxan, Lanthanidverbindung, Titanverbindung, Hafniumverbindung, Zirkoniumverbindung Säure, Metallsalz oder/und organischem Polymer eingesetzt werden.

Bei der weiteren Behandlung dieser beschichteten Substrate kann bei Bedarf unabhängig davon, ob davor Öl aufgebracht worden ist oder nicht, eine insbesondere alkalische Reinigung erfolgen.

Eine Beschichtung mit einem Korrosionsschutzprimer wie z.B. einem Schweißprimer kann zusätzlichen Korrosionsschutz insbesondere in Hohlräumen und schlecht zugänglichen Partien eines Substrats, Umformbarkeit oder/und Fügbarkeit z.B. beim Falzen, Kleben oder/und Schweißen ermöglichen. In der industriellen Praxis könnte ein Korrosionsschutzprimer insbesondere dann eingesetzt werden, wenn das damit beschichtete Substrat wie z.B. ein Blech nach der Beschichtung mit dem Korrosionsschutzprimer geformt oder/und mit einer weiteren Komponente gefügt wird und wenn weitere Beschichtungen erst danach aufgebracht werden. Wenn in diesem Verfahrensgang zusätzlich ein Korrosionsschutzprimer unter der Aktivierungsschicht und unter der Partikelbeschichtung aufgebracht wird, wird üblicherweise ein deutlich verbesserter Korrosionsschutz erzeugt.

Nach dem Aufbringen der Aktivierungsschicht und der Partikelschicht und gegebenenfalls nach dem Erzeugen einer im Wesentlichen geschlossenen oder einer geschlossenen Beschichtung aus der Partikelschicht kann auf diese Schicht bzw. Beschichtung mindestens eine im Wesentlichen organische, organische oder im Wesentlichen anorganische Schicht wie z.B. die Schicht eines Binders, Klebstoffes, Haftmittels, Primers oder/und Lackes aufgebracht werden. Besonders bevorzugt ist es, auf die im Wesentlichen geschlossene oder geschlossene Beschichtung mindestens eine Schicht eines Lackes oder sogar einen Lackaufbau z.B. aus Basislack und Klarlack oder eines beliebigen Lacksystems aufzubringen. Wenn danach eine weitere organische Beschichtung aufgebracht wird, kann damit eine Farbgebung oder/und eine Mattierung erzielt oder eine Möglichkeit zum Fügen erreicht werden. In anderen Ausführungsformen kann es bevorzugt sein, die derart beschichteten Oberflächen zu formen oder/und mit mindestens einer anderen Komponente zu fügen oder/und vor einem Klebevorgang eine Klebeschicht oder/und mindestens ein klebendes Formteil aufzubringen.

Bei dem erfindungsgemäßen Verfahren werden die Partikel in der Partikelschicht vorzugsweise so spülfest gehalten, dass nach mindestens einem Spülen mit einer Spülflüssigkeit wie z.B. Wasser oder/und mindestens einer wässerigen Nachspülflüssigkeit im Wesentlichen mindestens eine Monolage aus Partikeln erhalten bleibt.

Bei dem erfindungsgemäßen Verfahren werden die Partikel vorzugsweise so spülfest auf der insbesondere metallischen Oberfläche haften, dass trotz mindestens einer Spülung mit einer Spülflüssigkeit wie z.B. Wasser oder/und mindestens einer wässerigen Nachspülflüssigkeit im Wesentlichen mindestens eine Monolage aus Partikeln erhalten bleibt.

Die Behandlungsschritte und die möglichen Zusammensetzungen vor dem Aktivierungsschritt und nach der Ausbildung einer Beschichtung aus der Partikelschicht sind dem Fachmann grundsätzlich bekannt und können vielfältig variiert werden.

Die Erfindung wird auch gelöst mit einer Beschichtung, die nach dem erfindungsgemäßen Verfahren hergestellt wurde.

Die erfindungsgemäße Beschichtung kann vorzugsweise eingesetzt werden für beschichteten Substrate als Draht, Drahtgeflecht, Band, Blech, Profil, Verkleidung, Teil eines Fahrzeugs oder Flugkörpers, Element für ein Haushaltsgerät, Element im Bauwesen, Gestell, Leitplanken-, Heizkörper- oder Zaunelement, Formteil komplizierter Geometrie oder Kleinteil wie z.B. Schraube, Mutter, Flansch oder Feder. Besonders bevorzugt wird sie im Automobilbau, im Bauwesen, für den Gerätebau, für Haushaltsgeräte oder im Heizungsbau eingesetzt.

Es hat sich gezeigt, dass aus den erfindungsgemäß mit Partikeln beschichteten Oberflächen anschließend im Wesentlichen geschlossene oder geschlossene Beschichtungen mit einer Schichtdicke im Bereich von 5 nm bis 50 µm hergestellt werden können, insbesondere im Bereich von 15 nm bis 40 µm, von 25 nm bis 30 µm, von 45 nm bis 20 µm, von 60 nm bis 15 µm, von 80 nm bis 10 µm, von 100 nm bis 8 µm, von 130 nm bis 6 µm, von 160 nm bis 4 µm, von 200 nm bis 2 µm oder von 400 nm bis 1 µm. Entsprechende Schichtdicken können die einzelnen Partikelschichten vor ihrer Verfilmung oder/und vor ihrer Vernetzung aufweisen.

Es hat sich gezeigt, dass die erfindungsgemäß mit Partikeln beschichteten Oberflächen, aus denen anschließend im Wesentlichen geschlossene oder geschlossene Beschichtungen hergestellt wurden, auf deutlich einfachere und deutlich kostengünstigere Weise hergestellt werden konnten als beispielsweise Elektrotauchlack- oder Pulverlackbeschichtungen.

Ferner hat es sich gezeigt, dass derartige erfindungsgemäß hergestellte Beschichtungen Elektrotauchlack- oder Pulverlackbeschichtungen der heutigen industriellen Praxis in ihren Eigenschaften gleichwertig sein können, wenn entsprechend chemisch zusammengesetzte, insbesondere größere Partikel eingesetzt werden.

Es wurde überraschend festgestellt, dass das erfindungsgemäße Verfahren, das kein oder im Wesentlichen kein elektrolytisches Verfahren ist, auch in dem Fall, dass es mit elektrischer Spannung geringfügig unterstützt wird, und es daher üblicherweise kein Anlegen einer äußeren elektrischen Spannung bedarf, in einfacher Weise und ohne aufwendige Steuerung betrieben werden kann. Dieses Verfahren kann in einem weiten Temperaturbereich und auch bei Raumtemperatur eingesetzt werden, wenn von der nachfolgenden Trocknung abgesehen wird.

Außerdem liegt ein Vorteil des erfindungsgemäßen Verfahrens darin, dass die Beschichtung insbeondere aufgrund ihrer elektrostatischen Ausbildung auch um Ecken, Kanten und Spitzen herum aufgebracht wird. Das liegt in der Natur des Beschichtungsverfahrens, das keine elektrische Spannung benötigt und somit unabhängig von elektrischen Feldlinien funktioniert.

Es wurde überraschend festgestellt, dass bei dem erfindungsgemäßen Verfahren bezüglich der Aufbringung des Aktivierungsmittels keine aufwendigen Steuermaßnahmen erforderlich sind und bei geringem Chemikalienverbrauch hochwertige schützende Beschichtungen gebildet werden.

Es wurde überraschend festgestellt, dass bei dem erfindungsgemäßen Verfahren bezüglich der elektrostatischen Abscheidung der insbesondere organischen Partikel oft ein selbstregulierendes Verfahren stattfindet, bei dem keine aufwendigen Steuermaßnahmen erforderlich sind und bei geringem Chemikalienverbrauch hochwertige schützende Beschichtungen gebildet werden.

Es wurde überraschend festgestellt, dass die eingesetzten Dispersionen von organischen Polymerpartikeln auf der elektrostatisch aufgeladenen Oberfläche Partikelschichten auszubilden gestatteten, die nicht nur in weitgehend geschlossene oder geschlossene, weitgehend homogene oder homogene Beschichtungen überführt werden konnten - im Gegensatz zu denselben Dispersionen, die ohne entsprechende Aktivierung der Oberfläche aufgebracht wurden, sondern dass die Partikelschichten auch spülfest auf der Oberfläche verankert werden konnten.

Es wurde weiterhin überraschend festgestellt, dass die erfindungsgemäß hergestellten Beschichtungen einen für ihre Schichtdicke deutlich verbesserten Korrosionsschutz aufweisen können.

Es wurde weiterhin überraschend festgestellt, dass je nach Auswahl des Substrates, der verschiedenen Aktivierungsmittel und der verschiedenen Partikeldispersionen erfindungsgemäße Beschichtungen hergestellt werden können, die in ihrer Lackhaftung und in ihrem Korrosionsschutz individuell an die jeweiligen Anforderungen angepasst werden können.

### Figuren:

Fig 1A: Prinzipskizze zur Ausbildung eines dünnen Trockenfilms nach dem Stand der Technik z.B. beim Coil Coating.
Fig. 1B: Prinzipskizze zur Abscheidung einer dicken KTL-Schicht in einer Schichtstärke L von ca. 25 µm nach dem Stand der Technik.
Fig. 1C: Prinzipskizze zur Ausbildung eines dünnen Trockenfilms durch ein erfindungsgemäßes Verfahren.
Fig. 2A: REM-Aufnahme eines gereinigten und nicht weiter behandelten Bleches (VB 1).
Fig. 2B: REM-Aufnahme eines durch Silan-Behandlung aktivierten Bleches ohne nachfolgende saure Behandlung, aber nach Behandlung mit einer Polymerpartikeldispersion, noch unverfilmt (B12).

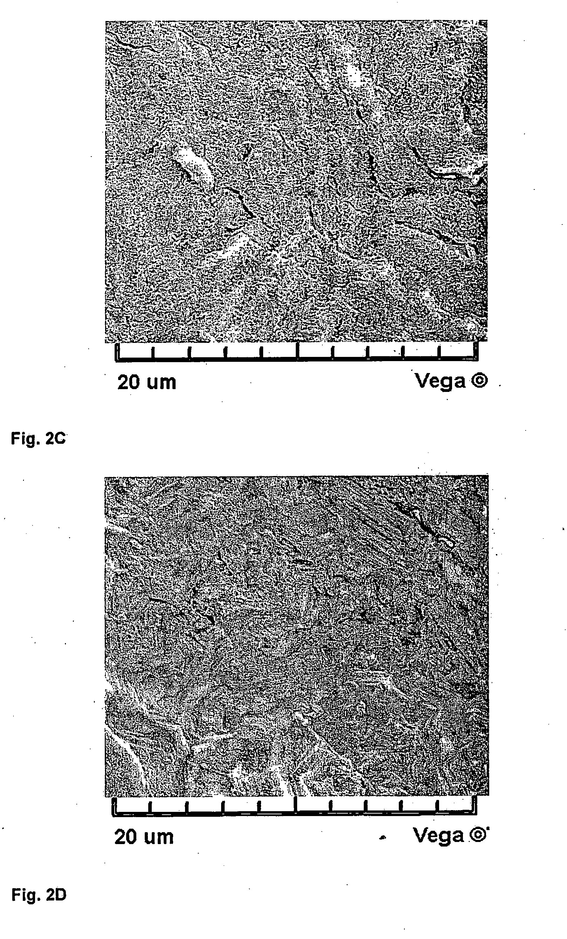

Fig. 2C: REM-Aufnahme eines durch Silan-Behandlung aktivierten Bleches mit anschließender saurer Behandlung und nach Behandlung mit einer Polymerpartikeldispersion, bereits verfilmt (B7). Die Aufnahme deutet an, dass aufgrund einer dichten und auch Kanten und Spitzen umgreifenden Partikelbeschichtung nach einer Verfilmung eine gleichmäßige, auch die Kanten und Spitzen bedeckende, weitgehend homogene oder homogene Beschichtung resultiert, die aufgrund dieser hochwertigen Bedeckung und Homogenität zu einem gesteigerten Korrosionsschutz führen kann. Die auf der Aufnahme erkennbaren Risse können bei dem erfindungsgemäßen Verfahren zumindest teilweise vermieden werden. Sie sind teilweise Folge der Bestrahlung mit einem Elektronenstrahl unter dem Rasterelektronenmikroskop und können bei nachfolgender Behandlung ausgeheilt oder/und ausgefüllt werden.
Fig. 2D: REM-Aufnahme eines gereinigten Bleches, das nicht mit einem Aktivierungsmittel, sondern nur mit einer Polymerpartikeldispersion behandelt wurde, noch unverfilmt (VB12). Im Vergleich zu den Figuren 2B und 2C sind nur sehr wenige Partikel abgeschieden worden.
Fig 3: REM-Aufnahme eines durch Silan-Behandlung aktivierten Bleches ohne nachfolgende saure Behandlung, aber nach Behandlung mit einer Polymerpartikeldispersion (noch unverfilmt). Diese Figur zeigt dieselbe Probe wie Figur 2B nur in einer höheren Vergrößerung. Sie soll den Kontrast zu der noch homogeneren und noch dichteren Belegung der Figur 4 verdeutlich. (B12).

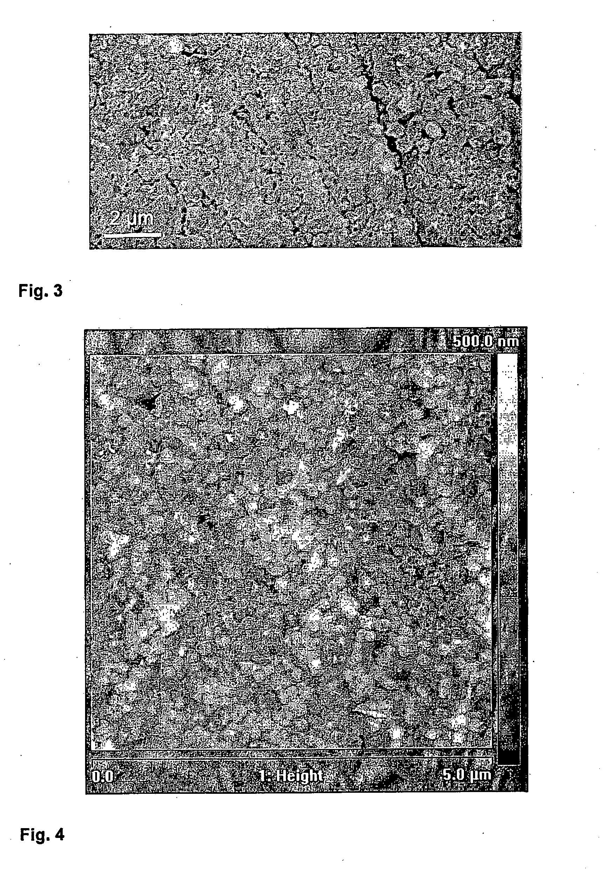

Fig. 4: Durch Silan-Behandlung aktiviertes Blech mit anschließender saurer Behandlung und nach Behandlung mit einer Polymerpartikeldispersion. Diese AFM-Aufnahme von einem Atomic Force Microscope des Typs QS 01830 der Fa. Currenta zeigt eine unverfilmte Oberfläche der Partikelschicht im Vergleich zur Figur 3, wobei die saure Behandlung zu einer noch dichteren und weniger und kleinere Lücken aufweisenden Lage geführt hat (B 28). Die Aufnahme deutet an, dass bei der dichten und auch Kanten und Spitzen umgreifenden Partikelbeschichtung nach einer Verfilmung eine gleichmäßige, auch die Kanten und Spitzen bedeckende, weitgehend homogene oder homogene Beschichtung resultiert, die aufgrund dieser hochwertigen Bedeckung und Homogenität zu einem gesteigerten Korrosionsschutz führen kann.

### Beispiele und Vergleichsbeispiele:

Die im Folgenden beschriebenen Beispiele (B) und die Vergleichsbeispiele (VB) sollen den Gegenstand der Erfindung näher erläutern.

Erläuterung der Prozeßschritte und Zusammensetzungen:
KSP = Korrosionsschutzprimer, VB = Vorbehandlung.

Substrat-Typ (Bleche):
1: Elektrolytisch verzinktes Stahlblech mit einer Zink-Schichtauflage von 5 µm, Blechdicke 0,81 mm.
2: Feuerverzinktes Stahlblech, Blechdicke ca. 0,8 mm.
3: Kaltgewalzter Stahl, Blechdicke ca. 0,8 mm.
4: Aluminiumlegierung der Güteklasse AC 170, Blechdicke ca. 1,0 mm.

Es wurden verschiedenartige wässerige Lösungen bzw. Dispersionen zum Kontaktieren oder/und Beschichten dieser Bleche vorbereitet.

### I. Vorherige Vorbehandlung:

Bei der vorherigen Vorbehandlung vor der Aktivierung der Oberfläche mit einem Aktivierungsmittel, das helfen soll, die Oberfläche elektrostatisch aufzuladen, wurden die zu behandelnden metallischen Oberflächen bei Bedarf zuerst alkalisch gereinigt und gegebenenfalls mit einer Zusammensetzung zur Vorbehandlung kontaktiert, um eine Konversionsschicht auszubilden, dann gegebenenfalls mit einem Korrosionsschutzprimer beschichtet und gegebenenfalls beölt. Die Beölung diente dem vorübergehenden Schutz der gereinigten oder/und beschichteten metallischen Oberflächen. Bei der weiteren Behandlung dieser beschichteten Substrate erfolgte unabhängig davon, ob davor Öl aufgebracht worden war oder nicht, eine alkalische Reinigung.

Alkalische Reinigung bei der Vorbehandlung:
1: Gardoclean^{®} S 5160 der Chemetall GmbH. Ansatz und Prozessbedingungen: 20 g/L mit Stadtwasser ansetzen, 20 s bei 60 °C spritzen, anschließend 20 s mit Stadtwasser spülen, danach mit VE-Wasser spülen und trocknen.

Chromfreie Vorbehandlung:
1: Auf Basis von TiF₆, ZrF₆, PO₄, Silan und Polymer, Schichtauflage 4-6 mg/m² Ti.
2: Auf Basis von TiF₆, PO₄, Silan und Organik, Schichtauflage 6 - 9 mg/m² Ti.

Korrosionsschutzprimer, appliziert mittels Rollcoating:
1: Gardoprotect^{®} 9493 der Chemetall GmbH, Schichtdicke ca. 3,8 µm.
2: KSP auf Basis von Zink, Polyepoxid und Isocyanat, Schichtdicke ca. 3,0 µm.

Bei den vorliegenden Versuchen wurde beim Aufbringen eines Korrosionsschutzprimers anschließend weder geformt, noch gefügt. Wenn in diesem Verfahrensgang zusätzlich ein Korrosionsschutzprimer unter der Aktivierungsschicht und unter der Partikelbeschichtung aufgebracht wurde, wurde ein deutlich verbesserter Korrosionsschutz ermittelt.

Beölung:
1: Mittels Tauchen in einer Petroleumbenzin-Lösung mit 5 Vol.-% eines Korrosionsschutzöls.

Alkalische Reinigung gegebenenfalls nach einer Beölung:
1: Zum Entfernen des Öls oder/und nur zum Reinigen: Gardoclean^{®} S5176 und Gardobond^{®} Additiv H7406 der Chemetall GmbH in Stadtwasser angesetzt. Bleche 3 min im Spritzen und 2 min im Tauchen bei 60 °C behandelt und anschließend 30 s mit Stadtwasser und 30 s mit deionisiertem Wasser abgespritzt.

### II. Aktivierung:

Die Aktivierung dient der Aufladung der Oberflächen mit vielen Ladungen. Wenn kationisch geladene Aktivierungsmittel auf die Oberflächen aufgebracht werden, müssen die aufzubringenden Partikel anionisch geladen sein, um entsprechend angezogen und verankert zu werden. Wenn anionisch geladene Aktivierungsmittel auf die Oberflächen aufgebracht werden, müssen die aufzubringenden Partikel kationisch geladen sein, um entsprechend angezogen und verankert zu werden.

Elektrostatische Aufladung der Oberflächen:
A) Mit kationisch geladenen Aktivierungsmitteln:
   1: Ethoxysilan mit Aminfunktionalitäten, ZrF₆, Kationen.
   2: modifiziertes Ethoxysilan mit Aminfunktionalität, ZrF₆, Kationen.
   3: stärker modifiziertes Ethoxysilan A mit Aminfunktionalität, ZrF₆, Kationen; pH-Wert **3,8 - 4,2.**
   4: stärker modifiziertes Ethoxysilan B mit Aminfunktionalität, ZrF₆, Kationen; pH-Wert **4,0 - 4,5.**
   5: SIVO^{®} 110 der Evonik Industries AG (Lösung mit kondensiertem Silan mit Aminfunktionalität), ZrF₆, Kationen; pH-Wert **4 - 9.**
B) Mit anionisch geladenen Aktivierungsmitteln:
   6: Wässerige Lösung auf Basis von Natriumpolyacrylat; pH-Wert 9.

### III: Spülen der Aktivierungsschicht:

Da bei dem Spülvorgang ein Teil der frischen Beschichtung abgespült wird, werden die restlichen Gehalte der Aktivierungsschicht zusammen mit Elementgehalten der Resten von Reinigungsmitteln, der Vorbehandlungsschicht, der Korrosionsschutzprimerschicht usw. ermittelt. Es erwies sich als vorteilhaft, wenn beim Spülen ein möglichst hoher Anteil der Aktivierungsschicht erhalten bleibt.

Die Elementgehalte der Aktivierungsschicht wurden mittels Röntgenfluoreszenzanalyse (RFA) für die Aktivierungsschicht einschließlich der Gehalte aus vorherigen Behandlungen - soweit vorhanden - bestimmt. Die Angaben beziehen sich auf die Elementgehalte nach dem Spülen. Hiermit können die verbliebenen Schichtdicken abgeschätzt und von Probe zu Probe verglichen werden, wobei verdeutlicht wird, dass trotz intensiven Spülens vergleichsweise hohe Anteile der Aktivierungsschicht erhalten bleiben. Diese Gehalte genügen, um die aktivierte Oberfläche für die nachfolgenden Behandlungsschritte IV und V wirksam vorzubereiten.

Parallele Untersuchungen mit Atomic Force Microscopy (AFM, Rasterkraftmikroskopie) und mit Rasterelektronenmikroskopie (REM) verdeutlichen, dass geschlossene Beschichtungen aus der Kombination der Kontaktierung mit Aktivierungsmittel auf Basis von Silan, gegebenenfalls durch die nachfolgende positive Beladung durch saure Behandlung, durch Beschichtung mit organischen Partikeln sowie durch Verfilmen oder/und Vernetzen der Partikelschicht gebildet werden.

### IV: Positive Beladung durch saure Behandlung bzw. negative Beladung durch basische Behandlung:

Wenn ein Aktivierungsmittel Funktionalitäten aufweist, können die Funktionalitäten beispielsweise durch eine saure Behandlung positiv beladen werden, um eine noch höhere und möglichst vollständige Beladung mit Protonen oder/und Kationen zu ermöglichen. So werden die Stickstoff-haltigen Gruppen, insbesondere die Amin-Funktionalitäten, vor allem von Silanen durch die saure Behandlung stärker positiv geladen. Außerdem ermöglicht diese saure Behandlung die Verwendung von Silanen in einem für diese Silane geeigneten pH-Wertbereich. Rasterelektronenmikroskopische Aufnahmen zeigten eine deutlich dichtere und gleichmäßigere Partikelabscheidung aufgrund dieser Behandlung an.

saure Behandlung bei Raumtemperatur zur möglichst vollständig Beladung mit Protonen oder/und Kationen:
1: Tauchen in Essigsäure 0,26 mol/L in deionisiertem Wasser.
2: Tauchen in Phosphorsäure 0,087 mol/L in deionisiertem Wasser.
3: Tauchen in Salpetersäure 0,26 mol/L in deionisiertem Wasser.
4: Tauchen in Schwefelsäure 0,13 mol/L in deionisiertem Wasser.

Danach wurden die entsprechend positiv geladenen beschichteten Bleche mit deionisiertem Wasser durch Tauchen gespült, um überschüssige Säure zu entfernen und den Verfahrensgang wie in der Automobilindustrie üblich so realtitätsnah wie möglich zu gestalten.

### V. Beschichtung der elektrostatisch aufgeladenen Oberflächen mit entgegen gesetzt geladenen Partikeln:

C) Anionisch stabilisierte wässerige Polymerpartikeldispersionen (PU = Polyurethan): Alle Feststoffgehalte wurden auf 30 Gew.-% eingestellt.
1: Polyurethan-Dispersion A der Firma Alberdingk-Boley. Mittlere Partikelgröße d₅₀ 150 nm. Viskosität 20 - 400 mPa·s. Zeta-Potenzial -50 mV. Mindestfilmbildungstemperatur 25 °C. pH-Wert 7 - 8.
2: Oxidativ trocknende Polyester-Polyurethan-Dispersion B der Bayer Materials Science AG. Mittlere Partikelgröße d₅₀ 125 nm. Viskosität 200-350 mPa·s. Zeta-Potenzial -60 mV. Mindestfilmbildungstemperatur 10 - 15 °C. pH-Wert 7,2.
3: Dispersion C auf Polyacrylat-Basis. Mittlere Partikelgröße d₅₀ 125 nm. Viskosität 400 mPa·s. Zeta-Potenzial -65 mV. Mindestfilmbildungstemperatur 19 °C. pH-Wert 8.
4: Dispersion D auf Polyacrylat-Basis. Mittlere Partikelgröße d₅₀ 150 nm. Viskosität 20 mPa·s. Zeta-Potenzial -51 mV. Mindestfilmbildungstemperatur 40 °C. pH-Wert 8.
5: Polyether-Polyurethan-Dispersion E der Bayer Materials Science AG. Mittlere Partikelgröße d₅₀ 250 - 500 nm. Viskosität 100 mPa-s. Zeta-Potenzial -57 mV. Mindestfilmbildungstemperatur 20 °C. pH-Wert 7 - 8,5.
6: Polyester-Polyurethan-Dispersion F der Bayer Materials Science AG. Mittlere Partikelgröße d₅₀ 200 - 400 nm. Viskosität 200 mPa·s. Zeta-Potenzial -50 mV. Mindestfilmbildungstemperatur 25 °C. pH-Wert 7 - 8.
7: Anionische und nichtionische Polyester-Polyurethan-Dispersion G der Bayer Materials Science AG. Mittlere Partikelgröße d₅₀ 140 nm. Viskosität 80 mPa·s. Zeta-Potenzial -83 mV. Mindestfilmbildungstemperatur 30 °C. pH-Wert 6 - 8.
8: Anionische und nichtionische Dispersion H der Bayer Materials Science AG. Mittlere Partikelgröße d₅₀ 120 nm. Viskosität 110 mPa·s. Zeta-Potenzial -80 mV. Mindestfilmbildungstemperatur 15 °C. pH-Wert 7.
9: Anionische und nichtionische Dispersion I der Materials Bayer Science AG. Mittlere Partikelgröße d₅₀ 170 nm. Viskosität 90 mPa·s. Zeta-Potenzial -84 mV. Mindestfilmbildungstemperatur 30 °C. pH-Wert 7.
10: Anionische und nichtionische Dispersion J der Bayer Materials Science AG. Mittlere Partikelgröße d₅₀ 110 nm. Viskosität 40 mPa·s. Zeta-Potenzial -82 mV. Mindestfilmbildungstemperatur 25 °C. pH-Wert 7.

Anionisch bzw. kationisch stabilisierende Gruppen für die anionischen Polymerpartikeldispersionen:
1: Anionische Gruppen A in Wasser.
2: Anionische Carboxylat-Gruppen in Wasser.
3: Kationische Gruppen B in Wasser.

### D) Kationisch stabilisierte wässerige Polymerpartikeldispersionen:

11: Kationisch stabilisierte aliphatische Polyesterurethan-Dispersion J der Fa. Picassian Polymers. Mittlere Partikelgröße d₅₀ 100 nm. Viskosität 550 mPa·s. Zeta-Potenzial +50 mV. Mindestfilmbildungstemperatur 20 °C. pH-Wert 5.
12: Kationisch stabilisierte Polyurethan-Dispersion K der Fa. Picassian Polymers. Mittlere Partikelgröße d₅₀ 120 nm. Viskosität 300 mPa·s. Zeta-Potenzial +60 mV. Mindestfilmbildungstemperatur 15 °C. pH-Wert 5.

Die Beschichtung erfolgte durch Tauchen der aktivierten und gespülten sowie gegebenenfalls säurebehandelten Bleche in eine Dispersion von entgegen gesetzt geladenen Partikeln bei Raumtemperatur. Danach wurden diese Partikel-beladenen Oberflächen mit deionisiertem Wasser durch Tauchen bei Raumtemperatur gespült und in einer Weise getrocknet, dass die Polymerpartikel verfilmen konnten, so dass eine weitgehend oder vollständig homogene Beschichtung gebildet wurde. Die Trockentemperaturen wurden so hoch gewählt, dass die organischen polymeren Bestandteile vernetzen konnten.

Das Spülen nach der Partikelbeschichtung dient dazu, um nicht elektrostatisch gebundene Partikel und Anhäufungen wie z.B. Läufer zu entfernen und den Verfahrensgang wie in der Automobilindustrie üblich so realitätsnah wie möglich zu gestalten. Denn in der Automobilindustrie erfolgt das Spülen mit Wasser üblicherweise entweder durch ein Tauchspülen oder ein Spritzspülen.

Trocknung oder Trocknung unter Verfilmung insbesondere der organischen polymeren Bestandteile:
1: 120 °C für 5 min.
2: 160 °C für 1 min.

Parallele Untersuchungen mit Atomic Force Microscopy (AFM) und mit Rasterelektronenmikroskopie (REM) verdeutlichten, dass erfindungsgemäß Partikelschichten mit einer ausreichend hohen Partikeldichte ausgebildet wurden, aus denen weitgehend geschlossene oder geschlossene Beschichtungen aus der Kombination der Kontaktierung mit Aktivierungsmittel auf Basis von Silan, gegebenenfalls durch zusätzliche positive Beladung durch saure Behandlung verstärkt, und durch Beschichtung mit organischen Partikeln gebildet werden konnten. Die mikroskopischen Aufnahmen zeigen eine homogene Verteilung der organischen Partikel, während bei manchen Proben ohne die positive Beladung durch saure Behandlung etwas weniger geschlossene Beschichtungen auftraten, was auf eine etwas weniger starke Aufladung hinweist.

### VI. Weitere Prüfungen:

Eine weitere Lackierung wurde nur aufgebracht, um die Lackhaftung ermitteln zu können.

Lackierung mit Lackaufbau Nr.:
1: Dreischichtiger Lackaufbau nach Standardlackaufbau der Daimler AG mit Funktionsschicht in Silbergrau, mit Wasserbasislack in Iridiumsilber und mit Klarlack.

Die Lackhaftung wurde bei vielen Beispielen durch Prüfung des Gitterschnitts und des Steinschlags bestimmt. Der Gitterschnitt wurde gemäß EN ISO 2409 ermittelt. Der Schnittabstand betrug 2 mm. In den Tabellen werden die Haftung des Lackaufbaus gemäß dem in der Norm beschriebenen Verfahren von 0 bis 5 benotet (Note 0 = beste Note). Der Steinschlag wurde gemäß DIN EN ISO 20567-1 ermittelt und nach dem Prüfschema, das in der Norm beschrieben ist, von 0 bis 5 benotet (Note 0 = beste Note).

Alle Bestimmungen der Korrosionsbeständigkeit erfolgten ohne zusätzlich aufgebrachte Lackschicht(en). Der VDA-Wechsel-Test wurde gemäß VDA-Prüfblatt 621-415 mit einer Wechselprüfung in einer Kammer nach einem bestimmten Zyklus über möglichst viele Zyklen zu je 7 Tagen bis zum ersten Auftreten von Weiß- oder/und Rotrost ausgeführt, wobei wöchentlich geprüft wurde. Die Salzsprühnebelprüfung erfolgte nach DIN EN ISO 9227 NSS und die Kondenswasser-Wechselklimaprüfung nach DIN EN ISO 6270-2. Der CASS-Test für Aluminium und Aluminiumlegierungen wurde in einer mit DIN EN ISO 9227 CASS kompatiblen Salzsprühkammer durchgeführt. Es wurde so viele Tage getestet, bis Weißrost auftrat. Es wird die Zahl der Tage in Stunden bis zum ersten Auftreten von Weißrost angegeben, wobei täglich geprüft wurde.

Der Filiform-Test für Aluminium und Aluminiumlegierungen wurde in einer luftdicht verschließbaren Prüfkammer nach DIN EN 3665 ausgeführt. Es wird die Zahl der Tage in Stunden bis zum ersten Auftreten von Weißrost angegeben, wobei täglich geprüft wurde.

Die folgenden Tabellen geben einen beispielhaften Ausschnitt aus den durchgeführten Versuchen und den hierbei gewonnen Ergebnissen wieder.

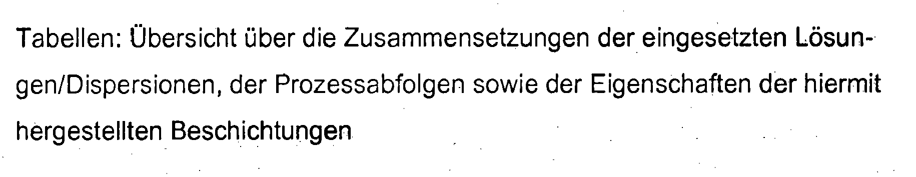

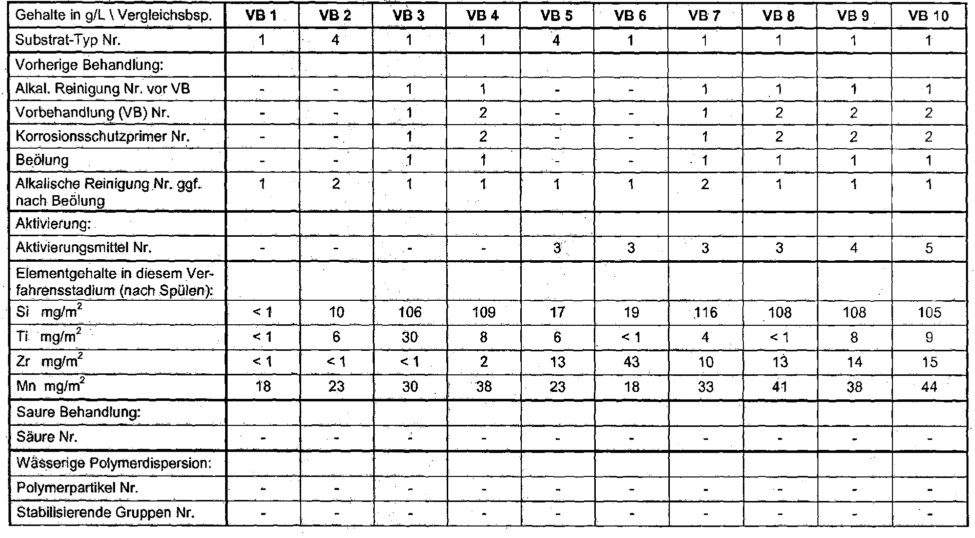

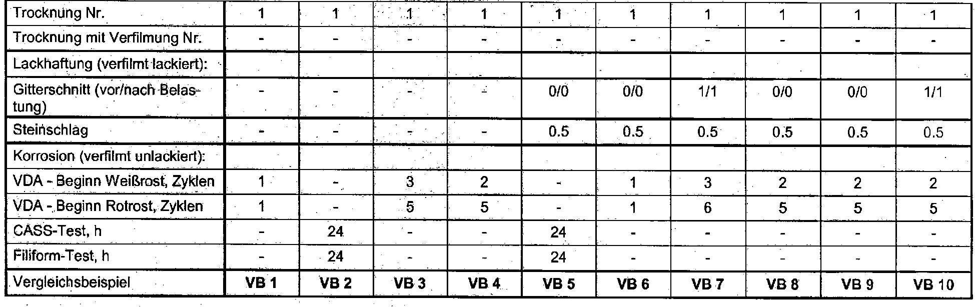

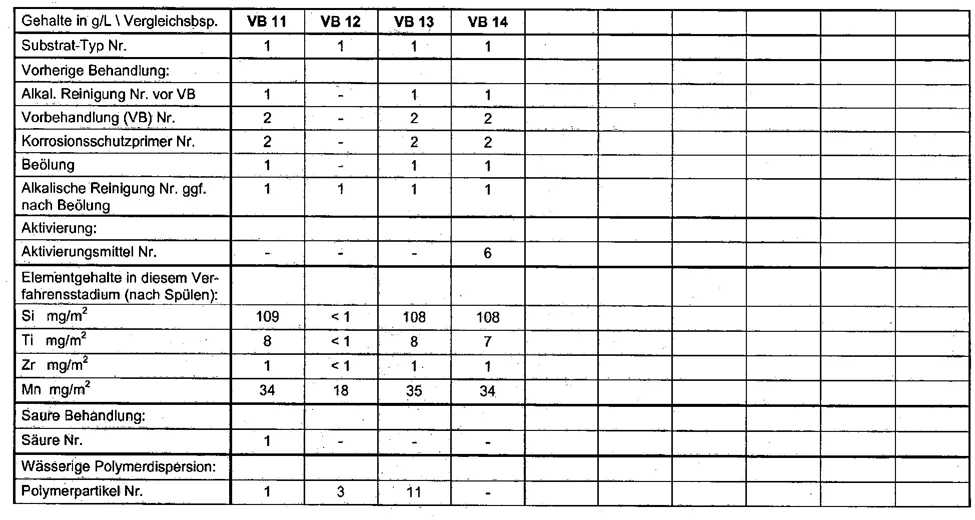

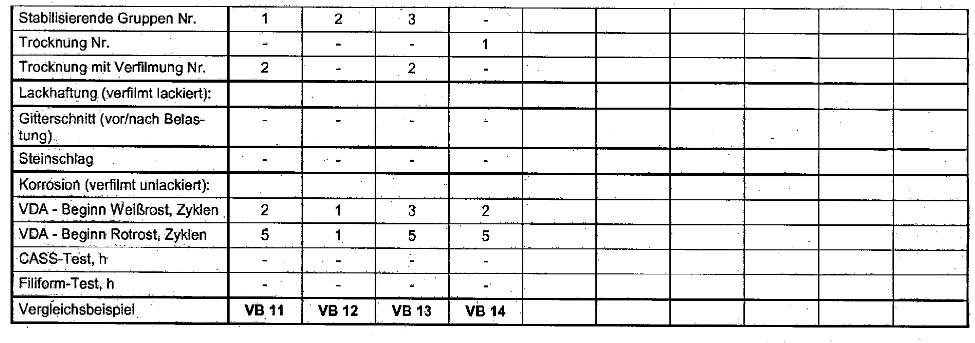

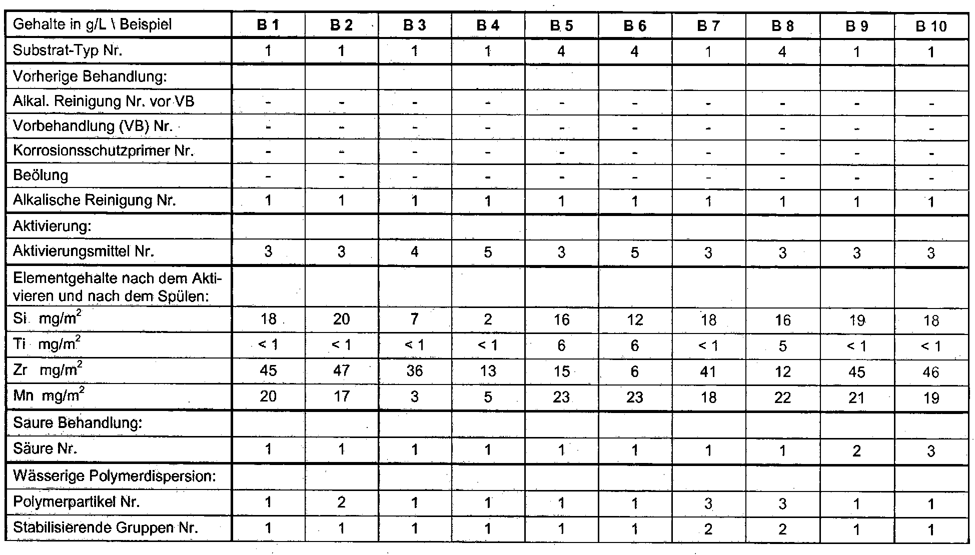

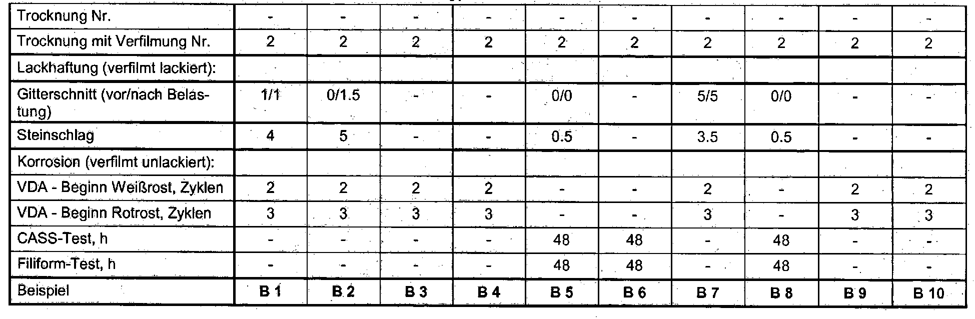

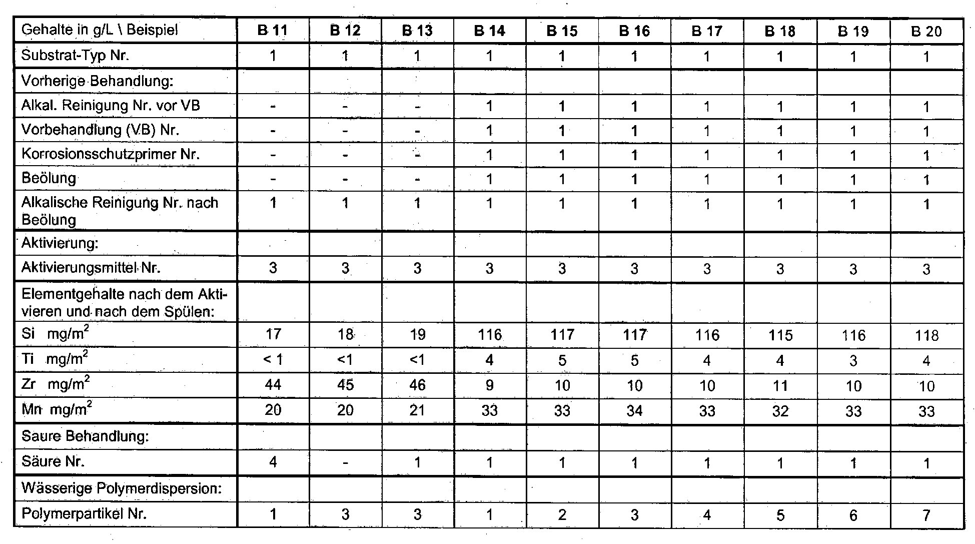

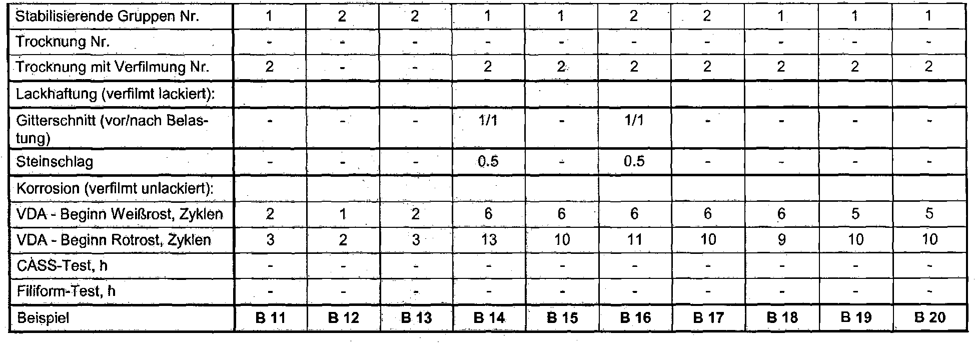

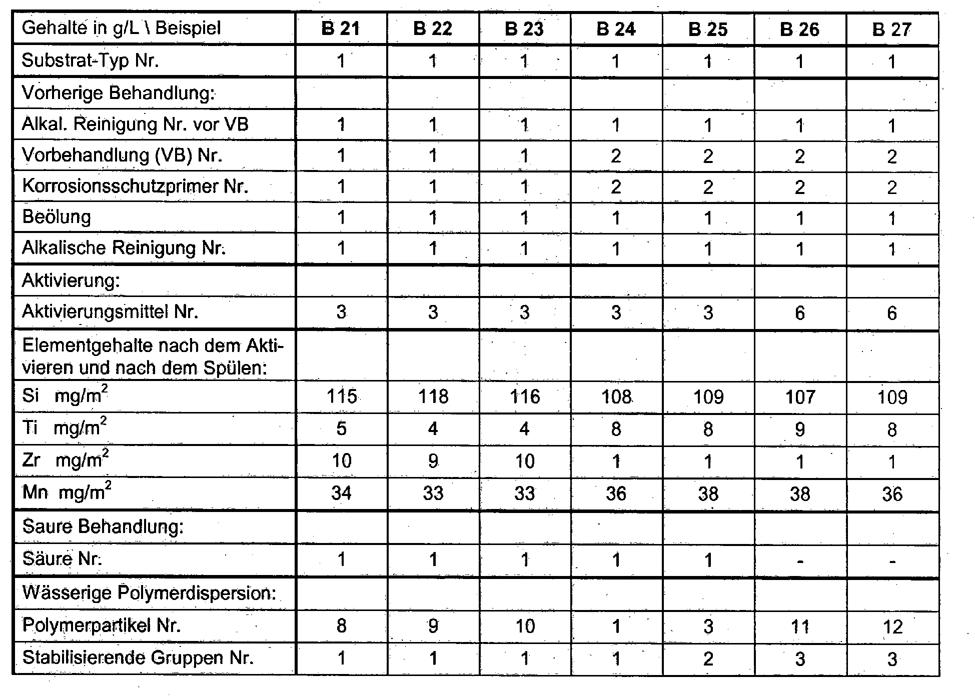

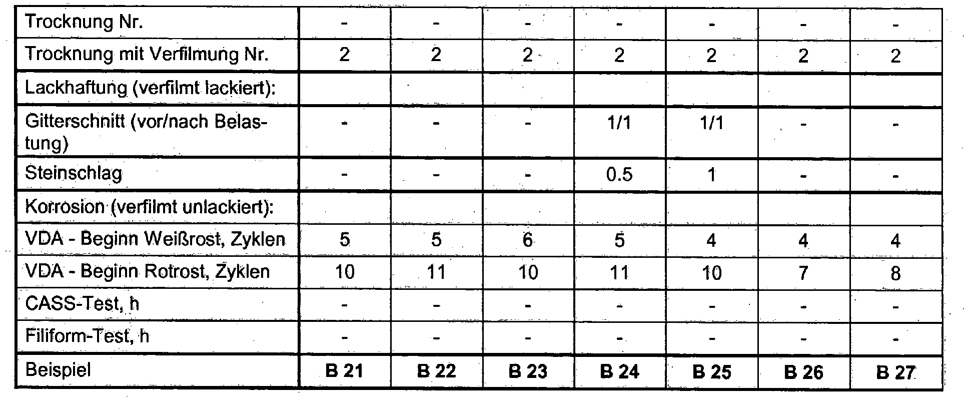

Bei den Vergleichsbeispielen VB1 und VB2 liegen blanke gereinigte metallische Oberflächen von E-Zink bzw. Aluminiumlegierung vor, die nicht weiter behandelt und nicht weiter beschichtet wurden. Ihr Korrosionsschutz ist entsprechend gering.

Die Bleche der Vergleichsbeispiele VB3 und VB4 wurden zusätzlich alkalisch gereinigt sowie mit einer Vorbehandlung und mit einem Korrosionsschutzprimer beschichtet. Insbesondere durch den Korrosionsschutzprimer ergibt sich eine deutlich erhöhte Korrosionsbeständigkeit.

Bei den Vergleichsbeispielen VB5 und VB6 liegen blanke gereinigte metallische Oberflächen von E-Zink bzw. Aluminiumlegierung vor, die mit einem Silan-haltigen Aktivierungsmittel behandelt, aber nicht mit einer Partikel enthaltenden Dispersion weiter beschichtet wurden. Ihr Korrosionsschutz ist so gering wie bei den nur gereinigten Blechen der Vergleichsbeispiele VB1 und VB2.

Bei den Vergleichsbeispielen VB7 bis VB11 wurde zusätzlich zu den Behandlungen wie bei den Vergleichsbeispielen VB3 und VB4 noch eine Behandlung mit einem Silan-haltigen Aktivierungsmittel eingesetzt, die einen gleich guten oder leicht besseren Korrosionsschutz wie bei den Vergleichsbeispielen VB3 und VB4 ergab.

Beim Vergleichsbeispiel VB12 wurde zusätzlich zum Vergleichsbeispiel VB1 noch eine Polymerpartikeldispersion eingesetzt.

Beim Arbeiten mit kationischen Polymerpartikeln ohne vorherige Verwendung eines anionischen Aktivierungsmittels (VB13) und mit dem anionischen Aktivierungsmittel Nr. 6 ohne die Verwendung von kationischen Polymerpartikeln (VB14) ergab sich kein erhöhter Korrosionsschutz, obwohl bei diesen Vergleichsbeispielen wieder mit zusätzlicher Reinigung, Vorbehandlung und Beschichtung mit Korrosionsschutzprimer gearbeitet wurde.

Bei den erfindungsgemäßen Beispielen B1 bis B13 wurde jeweils ohne zusätzliche Reinigung, Vorbehandlung und Beschichtung mit Korrosionsschutzprimer gearbeitet. Hierbei wurden die metallischen Substrate, die Aktivierungsmittel und die Polymerpartikeldispersionen variiert. Bei B12 wurde die zusätzliche saure Behandlung weggelassen, wodurch sich ein deutlich schlechterer Korrosionsschutz als bei den vergleichbaren erfindungsgemäßen Beispielen ergab. Dies verdeutlicht die Bedeutung der zusätzlichen Beladung. Die erfindungsgemäßen Beispiele B1 bis B13 haben jedoch einen deutlich besseren Korrosionsschutz als die Vergleichsbeispiele VB5, VB6 und VB12.

Bei den erfindungsgemäßen Beispielen B14 bis B27 wurde jeweils mit zusätzlicher Reinigung, Vorbehandlung und Beschichtung mit Korrosionsschutzprimer gearbeitet. Hierbei wurden die Aktivierungsmittel und die Polymerpartikeldispersionen variiert, wobei einerseits kationische Aktivierungsmittel mit anionischen Polymerpartikeldispersionen (B14 - B25) und andererseits anionische Aktivierungsmittel mit kationischen Polymerpartikeldispersionen (B26, B27) eingesetzt wurden. Hierbei wurde sogar ein Korrosionsschutz bezüglich VDA-Weißrost bzw. VDA-Rotrost von bis zu 6 bzw. 13 Zyklen erzielt. Dies ist bezogen auf die hier verwendeten sehr geringen Schichtdicken (in den Beispielen ca. 0,08 bis 0,3 µm) eine selten in der Oberflächentechnik erzielte Steigerung und Höhe des Korrosionsschutzes.

Bezüglich der Lackhaftung zeigt sich ein deutlicher Einfluss der gewählten Polymerpartikeldispersion bzw. des metallischen Substrats, ob sich eine sehr hohe Lackhaftung wie bei B5 und B8 oder wie bei B7 eine schlechte Lackhaftung ergibt.

Es wurde überraschend festgestellt, dass die eingesetzten Dispersionen von organischen Polymerpartikeln auf der elektrostatisch aufgeladenen Oberfläche nicht nur eine geschlossene, weitgehend homogene Schicht ausbildeten, sondern diese Schicht auch spülfest auf der Oberfläche verankert wurde. Im Gegensatz hierzu wiesen dieselben Dispersionen, die ohne entsprechende elektrostatische Aktivierung der Oberfläche aufgebracht wurden, nach dem Spülvorgang noch deutliche Lücken in der abgeschiedenen Partikelschicht auf (Figur 3 im Vergleich zur Figur 4).

Es ist bekannt, dass dünne Beschichtungen beispielsweise mit einer Schichtdicke im Bereich von 50 nm bis 4 µm sich aufgrund des mangelnden Barriereeffekts nur bedingt für Korrosionsschutzapplikationen eignen, da die Korrosionsbeständigkeit auch eine Funktion der Schichtdicke ist. Da jedoch die erfindungsgemäßen organischen polymeren Beschichtungen, die aus den organischen Partikeln gebildet werden, die Kanten und Spitzen des Untergrunds besser als bei anderen Herstellungsverfahren abdecken können und frei von gegebenenfalls störenden Bestandteilen sein können, die die Korrosionsbeständigkeit einschränken könnten und für andere Auftragungsarten wie z.B. elektrischem Tauchlack beispielsweise wegen der elektrischen Leitfähigkeit erforderlich sind, kann mit den erfindungsgemäß hergestellten organischen Beschichtungen auch ein vergleichsweise höherer Korrosionsschutz - bezogen auf gleiche Schichtdicken - erzielt werden.

Die erhebliche Verbesserung des Korrosionsschutzes ist in der homogenen, dünnen aus Partikeln hergestellten Beschichtung begründet, die im Gegensatz z.B. zu dem Vergleichsbeispiel VB12 kaum Angriffspunkte gegenüber dem korrosiven Medium aufweisen sollte (Figur 4 - Figur 1C im Gegensatz zu Figur 1A). Bei konventionellen Korrosionsschutzprimerbeschichtungen, die mittels Rakel oder Applikationswalze aufgetragen werden, entstehen leicht Fehler wie sie in der Figur 1A gezeigt werden. Die erfindungsgemäße dünne Polymerbeschichtung vermeidet derartige Fehlstellen und verhindert somit einen direkten Korrosionsangriff auf das Substrat an unvollständig bedeckten Stellen. Bemerkenswert ist nicht nur die Auswirkung bei der Weißrostbildung auf verzinkten Substraten, sondern die erfindungsgemäße Beschichtung vermag auf diesen Oberflächen selbst nach Weißrostbildung noch lange einen Korrosionsschutz aufrecht zu erhalten, der die Rotrostbildung erheblich verzögert, so dass bis zu 7 Zyklen Korrosionstest zwischen Weißrost- und Rotrostbildung liegen können, was sehr ungewöhnlich ist.

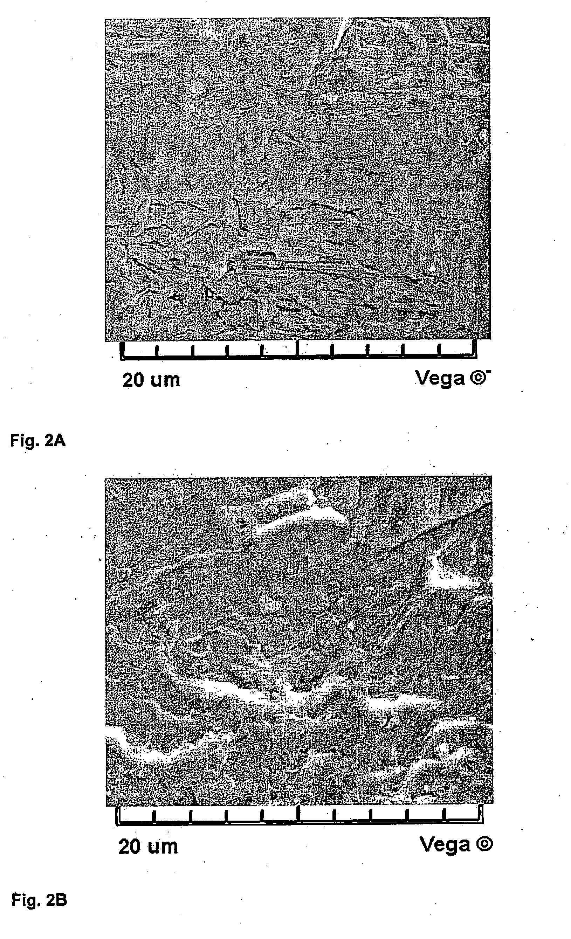

Die hohe Homogenität der erfindungsgemäßen Beschichtungen ist auch aus den REM- und AFM-Aufnahmen ersichtlich. Figur 2A (VB1) zeigt ein gereinigtes Blech, auf dem die scharfen Kanten der kristallinen Zinkbeschichtung deutlich hervortreten. Bei den Beispielen B12 und B13 wurde auf die Vorbehandlung, die Beschichtung mit einem Korrosionsschutzprimer und die zweite alkalische Reinigung verzichtet. Bei dem Beispiel der Figur 2B (B12) wurde anders als bei B13 auch auf die saure Behandlung nach dem Beschichten mit Aktivierungsmittel verzichtet, um die starke Wirkung der zusätzlichen positiven Beladung für das erfindungsgemäße Verfahren herauszustellen. Auch in Figur 2B sind die scharfen Kanten der kristallinen Zinkbeschichtung neben einer Vielzahl von Partikeln erkennbar. Es ist ersichtlich, dass aus solchen Partikelschichten Beschichtungen hergestellt werden können, die in ihrem Korrosionsschutz durch zusätzliche positive Beladung vor der Partikelbeschichtung noch weiter verbessert werden können. Im Gegensatz dazu weist die nach dem erfindungsgemäßen Verfahren behandelte Oberfläche (Figur 2D, B7) eine homogene Beschichtung auf, die relativ zu der Schichtstärke einen besonders hohen Korrosionsschutz bietet.

In Figur 3 wird auf der rasterkraftmikroskopischen Aufnahme die homogene Partikelbelegung vordem Verfilmen deutlich. Hierbei wird ersichtlich, dass sich die Partikel sowohl an den Kanten, als auch in den Vertiefungen in weitgehend lückenfreier und dichter Packung angeordnet haben.

## Patentansprüche

1. Verfahren zum stromlosen Beschichten von metallischen Oberflächen von Gegenständen, die gegebenenfalls vorbeschichtet sein können, (= zu beschichtende Oberflächen) mit einer Vielzahl an anorganischen wasserunlöslichen oder/und organischen wasserunlöslichen Partikeln unter Ausbildung einer spülfesten Partikelschicht, bei dem die Partikel in einer stabilisierbaren oder stabilen wässerigen Zusammensetzung in Form einer Dispersion auf den zu beschichtenden Oberflächen aufgebracht werden und vorwiegend durch elektrostatische Kräfte auf den zu beschichtenden Oberflächen aufgebracht und festgehalten werden, **dadurch gekennzeichnet,**
**dass** die zu beschichtenden Oberflächen zuerst mit einem Aktivierungsmittel aktiviert werden, wobei mit dem Aktivierungsmittel auf den zu beschichtenden Oberflächen eine Aktivierungsschicht mit Ladungen ausgebildet wird, wobei diese Ladungen den Ladungen der anschließend aufzubringenden Partikel der Zusammensetzung entgegen gesetzt geladen sind oder/und geladen werden,
**dass** eine Aktivierungsschicht auf der zu beschichtenden Oberfläche ausgebildet wird, die bei einer kationischen Aktivierungsschicht durch Kontaktieren mit mindestens einer kationischen Verbindung und die bei einer anionischen Aktivierungsschicht durch Kontaktieren mit mindestens einer anionischen Substanz erzeugt wird,
**dass** als kationische Verbindung(en) zur Ausbildung der Aktivierungsschicht mindestens ein protonierbares oder/und protoniertes Silan verwendet wird oder dass als anionische Substanz(en) zur Ausbildung der Aktivierungsschicht mindestens eine deprotonierbare Verbindung, mindestens eine deprotonierte Verbindung oder/und mindestens ein deprotoniertes Anion ausgewählt aus a) Substanzen mit Gruppen von Borat, Carbonat, Carboxylat, Halogenid wie z.B. Chlorid oder/und Fluorid, Hydroxid, Phosphat, Phosphonat, Sulfat oder/und Sulfonat und b) negativ geladene Komplexen oder /und deren Estern oder c) anionisches organisches Polymer verwendet wird/werden,
**dass** die bei einem Beschichtungsschritt mit einer Partikel enthaltenden Zusammensetzung aufgebrachten Partikel entgegen gesetzt zu den Ladungen der Aktivierungsschicht geladen sind oder/und geladen werden,
**dass** als Partikel anionisch stabilisierte wässerige Polymerpartikeldispersionen oder kationisch stabilisierte wässerige Polymerpartikeldispersionen verwendet werden,
**dass** bei einem oder bei einem jeden Beschichtungsschritt mit einer Partikel enthaltenden Zusammensetzung jeweils eine Schicht in einer mittleren Dicke von mehreren mittleren Partikelgrößen der aufgebrachten Partikel auf den zu beschichtenden Oberflächen ausgebildet wird und gegebenenfalls die oder jede Partikelschicht anschließend verfilmt oder/und vernetzt wird, wobei aus den mit Partikeln beschichteten Oberflächen im Wesentlichen geschlossene oder geschlossene Beschichtungen mit einer Schichtdicke im Bereich von 100 nm bis 15 µm hergestellt werden.

2. Verfahren nach Anspruch 1, **dadurch gekennzeichnet, dass** bei dem einen oder bei einem jeden Beschichtungsschritt mit einer Partikel enthaltenden Zusammensetzung unabhängig von dem weiteren Andauern dieses Beschichtungsschritts jeweils eine Schicht in einer mittleren Dicke von ein oder mehreren mittleren Partikelgrößen der aufgebrachten Partikel auf den zu beschichtenden Oberflächen ausgebildet wird.

3. Verfahren nach Anspruch 1 oder 2, **dadurch gekennzeichnet, dass** die im Falle von mindestens einem zweiten elektrostatischen Beschichtungsschritt mit einer Partikel enthaltenden Zusammensetzung elektrostatisch aufgebrachten Partikel entgegen gesetzt zu den Ladungen der jeweils zuvor aufgebrachten Schicht von Partikeln geladen sind oder/und geladen werden.

4. Verfahren nach einem der vorstehenden Ansprüche, **dadurch gekennzeichnet, dass** mehrere Partikelschichten aus Partikel enthaltenden Zusammensetzungen übereinander ausgebildet werden, wobei diese Schichten abwechselnd aufgebaut sind oder/und werden aus Partikeln, die mit Protonen oder/und Kationen positiv geladen sind oder/und werden und aus Partikeln, die mit Anionen negativ geladen sind oder/und werden.

5. Verfahren nach einem der vorstehenden Ansprüche, **dadurch gekennzeichnet, dass** ein Spülen der Aktivierungsschicht oder/und der Partikelschicht mit einer fließenden oder/und in einer strömenden wässerigen Spülflüssigkeit z.B. durch Abspülen, Spritzspülen oder/und Tauchspülen erfolgt.

6. Verfahren nach einem der vorstehenden Ansprüche, **dadurch gekennzeichnet, dass** die Aktivierungsschicht mit Protonen oder/und Kationen positiv geladen ist oder/und wird und dass die erste darauf aufgebrachte Partikelschicht einer Partikel enthaltenden Zusammensetzung entsprechend mit Anionen oder/und mit mindestens einer anionischen Verbindung negativ geladen ist oder/und wird - oder umgekehrt.

7. Verfahren nach einem der vorstehenden Ansprüche, **dadurch gekennzeichnet, dass** die Aktivierungsschicht oder die Partikel der letzten Partikelschicht positiv bzw. negativ geladenen Flüssigkeit oder/und mit positiven bzw. negativen elektrischen Ladungen eines Gases oder im Vakuum beladen (= positive bzw. negative Beladung) wird/werden.

8. Verfahren nach einem der vorstehenden Ansprüche, **dadurch gekennzeichnet, dass** die geladene Aktivierungsschicht oder die geladenen Partikel der letzten Partikelschicht mit mindestens einer entsprechend geladenen Substanz in Kontakt kommt/kommen, was zu einer noch stärkeren positiven oder negativen Ladung führt.

9. Verfahren nach einem der vorstehenden Ansprüche, **dadurch gekennzeichnet, dass** die positive Beladung der Aktivierungsschicht oder von Partikeln der Partikelschicht durch Behandeln mit mindestens einer Säure oder/und mit mindestens einer Substanz, die kationische Gruppen trägt, erfolgt oder dass die negative Beladung einer Aktivierungsschicht oder von Partikeln der Partikelschicht durch Behandeln mit mindestens einem Anion oder/und mit mindestens einer Substanz, die anionische Gruppen trägt.

10. Verfahren nach einem der vorstehenden Ansprüche, **dadurch gekennzeichnet, dass** die Aktivierung der kationischen Aktivierungsschicht oder von Partikeln der Partikelschicht mit mindestens einer kationischen Siliciumverbindung oder/und die positive Beladung der Aktivierungsschicht oder von Partikeln der Partikelschicht durch Behandeln mit mindestens einer Säure oder/und mit kationischen Gruppen erfolgt.

11. Verfahren nach einem der vorstehenden Ansprüche, **dadurch gekennzeichnet, dass** die Aktivierung der anionischen Aktivierungsschicht oder von Partikeln der Partikelschicht mit mindestens einer anionischen Verbindung oder/und die negative Beladung der Aktivierungsschicht oder von Partikeln der Partikelschicht durch Behandeln mit mindestens einem Anion oder/ und mit mindestens einer anionischen Verbindung erfolgt.

12. Verfahren nach einem der vorstehenden Ansprüche, **dadurch gekennzeichnet, dass** die Zusammensetzung ein zeta-Potenzial im Bereich von - 200 bis + 200 mV aufweist, gemessen bei den pH-Werten einer stabilen Dispersion.

13. Verfahren nach einem der vorstehenden Ansprüche, **dadurch gekennzeichnet, dass** als Partikel in der Partikel enthaltenden Zusammensetzung, in der Partikelschicht oder/und in der hieraus gebildeten Beschichtung organische Polymere auf Basis von Epoxid, Ethylenacrylat, Alkyl(meth)acrylat, Polyethylen, Polyisobutylen, Polyacrylonitril, Polyvinylchlorid, Poly(meth) acrylat, Polyalkyl(meth)acrylat wie z.B. Polymethylmethacrylat, Polyvinylacetat, Polyvinylalkohol, Polyvinylidenchlorid, Polytetrafluorethylen, Polyisopren, Polypropylen, Poly(meth)acrylat, Polyester, Polyether, Aminoplast, Polyurethan, Phenolharz, Alkydharz, Polycarbonat, Polyamid, Polystyrol, Polysulfid, Polysiloxan, Polyvinylacetal, Polyacetal, Styrolacrylat, deren Derivaten, deren Compoundierungen oder/und deren Gemischen verwendet werden.

14. Verfahren nach einem der vorstehenden Ansprüche, **dadurch gekennzeichnet, dass** die entstandene Partikelschicht mit einer Spülflüssigkeit wie z.B. Wasser oder/und mindestens einer wässerigen Nachspülflüssigkeit gespült wird und danach im nassen, feuchten oder angetrockneten Zustand mit mindestens einer organischen Zusammensetzung eines Primers oder/ und Lacks oder/und mit weiteren Partikeln von entgegen gesetzter Ladung zu den Partikeln der zuvor aufgebrachten Partikelschicht beschichtet wird.

15. Verfahren nach einem der vorstehenden Ansprüche, **dadurch gekennzeichnet, dass** eine organische Partikel enthaltende Partikelschicht ausgebildet und anschließend verfilmt oder/und vernetzt wird.

16. Verfahren nach einem der vorstehenden Ansprüche, **dadurch gekennzeichnet, dass** die Partikel enthaltende Zusammensetzung, die hieraus gebildete Partikelschicht oder/und die hieraus z.B. durch Verfilmen oder/und Vernetzen gebildete Beschichtung neben mindestens einer Art von Partikeln auch jeweils mindestens einen Farbstoff, ein Farbpigment, ein Korrosionsschutzpigment, einen Korrosionsinhibitor, ein Leitfähigkeitspigment, eine weitere Art an Partikeln, ein Silan/Silanol/Siloxan/Polysiloxan/Silazan/Polysilazan, ein Lackadditiv oder/und ein Additiv wie z.B. jeweils mindestens ein Tensid, einen Entschäumer oder/und ein Dispergiermittel, enthält/enthalten.

17. Verfahren nach einem der vorstehenden Ansprüche, **dadurch gekennzeichnet, dass** die Zusammensetzung oder/und die hieraus gebildete Beschichtung neben mindestens einer Art von Partikeln und gegebenenfalls neben mindestens einer nicht-partikulären Substanz teilweise oder vollständig eine chemische Zusammensetzung für einen Primer, einen Lack wie beispielsweise für einen Füller, Decklack oder/und Klarlack aufweist.

18. Metallische Oberflächen von Geganständen Umfassend eine Beschichtung hergestellt nach dem Verfahren nach einem der vorstehenden Ansprüche.

19. Verwendung der nach dem Verfahren gemäß mindestens einem der vorstehenden Ansprüche 1 bis 17 beschichteten Substrate als Draht, Drahtgeflecht, Band, Blech, Profil, Verkleidung, Teil eines Fahrzeugs oder Flugkörpers, Element für ein Haushaltsgerät, Element im Bauwesen, Gestell, Leitplanken-, Heizkörper- oder Zaunelement, Formteil komplizierter Geometrie oder Kleinteil wie z.B. Schraube, Mutter, Flansch oder Feder.

## Claims

1. A process for the currentless coating of metallic surfaces of objects, which can optionally be precoated (= surfaces to be coated), with a large number of inorganic water-insoluble or/and organic water-insoluble particles to form a wash-resistant particle layer, in which the particles are applied to the surfaces to be coated in a stabilizable or stable aqueous composition in the form of a dispersion and are applied to and held on the surfaces to be coated predominantly by means of electrostatic forces, **characterized in that**
the surfaces to be coated are first activated with an activating agent, wherein an activation layer with charges is formed with the activating agent on the surfaces to be coated, wherein these charges have been or/and are charged oppositely to the charges of the particles of the composition which are subsequently to be applied,
an activation layer, which in the case of a cationic activation layer is produced by contacting with at least one cationic compound and which in the case of an anionic activation layer is produced by contacting with at least one anionic substance, is formed on the surface to be coated,
at least one protonatable or/and protonated silane is used as the cationic compound(s) to form the activation layer, or at least one deprotonatable compound, at least one deprotonated compound or/and at least one deprotonated anion chosen from a) substances with groups of borate, carbonate, carboxylate, halide, such as e.g. chloride or/and fluoride, hydroxide, phosphate, phosphonate, sulfate or/and sulfonate, and b) negatively charged complexes or/and esters thereof, or c) anionic organic polymer is/are used as the anionic substance(s) to form the activation layer,
the particles applied in a coating step with a particle-containing composition have been or/and are charged oppositely to the charges of the activation layer,
anionically stabilized aqueous polymer particle dispersions or cationically stabilized aqueous polymer particle dispersions are used as particles,
in a or in each coating step with a particle-containing composition in each case a layer is formed on the surfaces to be coated in an average thickness of a plurality of average particle sizes of the particles applied, and the or each particle layer is optionally then formed into a film or/and cross-linked, wherein substantially closed or closed coatings with a layer thickness in the range of 100 nm to 15 µm are produced from the surfaces coated with particles.

2. A process according to claim 1, **characterized in that** in the one or in each coating step with a particle-containing composition, regardless of the subsequent continuation of this coating step, in each case a layer is formed on the surfaces to be coated in an average thickness of one or more average particle sizes of the particles applied.

3. A process according to claim 1 or 2, **characterized in that** the particles applied electrostatically in the case of at least a second electrostatic coating step with a particle-containing composition have been or/and are charged oppositely to the charges of the particular previously applied layer of particles.

4. A process according to one of the preceding claims, **characterized in that** several particle layers are formed on top of one another from particle-containing compositions, these layers having been or/and being built up alternately from particles which have been or/and are positively charged with protons or/and cations and from particles which have been or/and are negatively charged with anions.

5. A process according to one of the preceding claims, **characterized in that** washing of the activation layer or/and of the particle layer is effected with a flowing or/and in a streaming aqueous wash liquid, e.g. by spraying down, spray washing or/and dip washing.

6. A process according to one of the preceding claims, **characterized in that** the activation layer has been or/and is positively charged with protons or/and cations, and **in that** the first particle layer of a particle-containing composition applied thereto has been or/and is correspondingly negatively charged with anions or/and with at least one anionic compound - or *vice versa.*

7. A process according to one of the preceding claims, **characterized in that** the activation layer or the particles of the last particle layer is/are charged with positively or negatively charged liquid or/and with positive or negative electrical charges of a gas or in vacuo (= positive or negative charging).

8. A process according to one of the preceding claims, **characterized in that** the charged activation layer or the charged particles of the last particle layer comes/come into contact with at least one correspondingly charged substance, which leads to an even stronger positive or negative charge.

9. A process according to one of the preceding claims, **characterized in that** the positive charging of the activation layer or of particles of the particle layer is effected by treatment with at least one acid or/and with at least one substance which carries cationic groups, or negative charging of an activation layer or of particles of the particle layer is effected by treatment with at least one anion or/and with at least one substance which carries anionic groups.

10. A process according to one of the preceding claims, **characterized in that** the activation of the cationic activation layer or of particles of the particle layer is effected with at least one cationic silicon compound or/and the positive charging of the activation layer or of particles of the particle layer is effected by treatment with at least one acid or/and with cationic groups.

11. A process according to one of the preceding claims, **characterized in that** the activation of the anionic activation layer or of particles of the particle layer is effected with at least one anionic compound or/and the negative charging of the activation layer or of particles of the particle layer is effected by treatment with at least one anion or/and with at least one anionic compound.

12. A process according to one of the preceding claims, **characterized in that** the composition has a zeta potential in the range of from -200 to +200 mV, measured at the pH values of a stable dispersion.

13. A process according to one of the preceding claims, **characterized in that** organic polymers, based on epoxide, ethylene acrylate, alkyl(meth)acrylate, polyethylene, polyisobutylene, polyacrylonitrile, polyvinyl chloride, poly(meth)acrylate, polyalkyl(meth)acrylate, such as e.g. polymethylmethacrylate, polyvinyl acetate, polyvinyl alcohol, polyvinylidene chloride, polytetrafluoroethylene, polyisoprene, polypropylene, poly(meth)acrylate, polyester, polyether, aminoplast, polyurethane, phenolic resin, alkyd resin, polycarbonate, polyamide, polystyrene, polysulfide, polysiloxane, polyvinyl acetal, polyacetal, styrene acrylate, derivatives thereof, compoundings thereof or/and mixtures thereof, are used as particles in the particle-containing composition, in the particle layer or/and in the coating formed therefrom.

14. A process according to one of the preceding claims, **characterized in that** the particle layer formed is washed with a wash liquid, such as e.g. water or/and at least one aqueous rinsing liquid, and thereafter, in the wet, damp or superficially dried state, is coated with at least one organic composition of a primer or/and lacquer or/and with further particles of opposite charge to the particles of the previously applied particle layer.

15. A process according to one of the preceding claims, **characterized in that** a particle layer containing organic particles is formed and is then formed into a film or/and cross-linked.

16. A process according to one of the preceding claims, **characterized in that** the particle-containing composition, the particle layer formed therefrom or/and the coating formed therefrom, e.g. by film-formation or/and cross-linking, also contains/contain, in addition to at least one type of particles, in each case at least a dyestuff, a coloured pigment, a corrosion-protection pigment, a corrosion-inhibitor, a conductivity pigment, a further type of particles, a silane/silanol/siloxane/polysiloxane/silazane/ polysilazane, a lacquer additive or/and an additive, such as e.g. in each case at least a surfactant, a defoamer or/and a dispersing agent.

17. A process according to one of the preceding claims, **characterized in that** the composition or/and the coating formed therefrom has, in addition to at least one type of particles and optionally in addition to at least one non-particulate substance, part of or a complete chemical composition for a primer, a lacquer, such as, for example, for a filler, top lacquer or/and clear lacquer.

18. Metallic surfaces of objects comprising a coating produced by the process according to one of the preceding claims.

19. Use of the substrates coated by the process according to at least one of the preceding claims 1 to 17 as a wire, braided wire, belt, metal sheet, profile, lining, part of a vehicle or flying object, element for a domestic appliance, element in building construction, stand, element of a crash barrier, radiator or fence, moulding of complicated geometry or small part, such as e.g. screw, nut, flange or spring.

## Revendications

1. Procédé de revêtement sans courant de surfaces métalliques d'objets qui peuvent le cas échéant avoir reçu un prérevêtement, (= surfaces à revêtir) comprenant une pluralité de particules inorganiques insolubles dans l'eau ou/et organiques insolubles dans l'eau, avec formation d'une couche de particules résistant au rinçage, selon lequel les particules sont déposées dans une composition aqueuse stabilisable ou stable, sous la forme d'une dispersion, sur les surfaces à revêtir et sont déposées et maintenues principalement par des forces électrostatiques sur les surfaces à revêtir, **caractérisé**
**en ce que** les surfaces à revêtir sont d'abord activées avec un agent d'activation, l'agent d'activation ayant pour effet de former une couche d'activation avec des charges sur les surfaces à activer, lesdites charges étant opposées aux charges des particules de la composition devant être déposées ensuite et/ou recevant une charge opposée,
**en ce que** l'on réalise sur la surface à revêtir une couche d'activation qui, pour une couche d'activation cationique, est produite par mise en contact avec au moins un composé cationique et qui, pour une couche d'activation anionique, est produite par mise en contact avec au moins une substance anionique,
**en ce que** l'on utilise en tant que composé(s) cationique(s) pour la formation de la couche d'activation, au moins un silane protonable ou/et protoné, ou en ce que l'on utilise en tant que substance(s) anionique(s) pour la formation de la couche d'activation, au moins un composé déprotonable, au moins un composé déprotoné ou/et au moins un anion déprotoné, sélectionné parmi a) des substances comportant des groupes de borate, carbonate, carboxylate, halogénure, par exemple chlorure ou/et fluorure, hydroxyde, phosphate, phosphonate, sulfate ou/et sulfonate et b) des complexes à charge négative ou/et leurs esters ou c) du polymère anionique organique,
**en ce que** les particules qui sont déposées au cours d'une étape de revêtement avec une composition contenant des particules ont ou/et reçoivent des charges qui sont opposées aux charges de la couche d'activation,
**en ce que** l'on utilise en tant que particules des dispersions de particules polymères aqueuses à stabilisation anionique ou des dispersions de particules polymères aqueuses à stabilisation cationique,
**en ce que** lors d'une étape de revêtement ou lors de chaque étape de revêtement avec une composition contenant des particules, on réalise, sur les surfaces à revêtir, respectivement une couche d'une épaisseur moyenne de plusieurs tailles de particules moyennes des particules déposées, et ensuite on filme ou/et on réticule éventuellement la couche de particules ou chaque couche de particules, sachant que l'on réalise à partir des surfaces revêtues de particules, des revêtements sensiblement fermés ou fermés, avec une épaisseur de couche située dans la plage allant de 100 nm à 15 µm.

2. Procédé selon la revendication 1, **caractérisé en ce que** lors de l'étape de revêtement ou lors de chaque étape de revêtement avec une composition contenant des particules, on réalise, sur les surfaces à revêtir, respectivement une couche d'une épaisseur moyenne d'une ou plusieurs tailles de particules moyennes des particules déposées, indépendamment de la durée ultérieure de cette étape de revêtement.

3. Procédé selon la revendication 1 ou 2, **caractérisé en ce que** les particules qui sont déposées par voie électrostatique dans le cas d'au moins une deuxième étape de revêtement électrostatique avec une composition contenant des particules ont ou/et reçoivent des charges qui sont opposées aux charges de la couche de particules préalablement appliquée.

4. Procédé selon l'une des revendications précédentes, **caractérisé en ce que** l'on réalise plusieurs couches de particules constituées de compositions contenant des particules, lesdites couches étant formées en alternance à partir de particules qui sont chargées positivement avec des protons ou/et des cations ou/et reçoivent de telles charges, et à partir de particules qui sont chargées négativement avec des anions ou/et reçoivent de telles charges.

5. Procédé selon l'une des revendications précédentes, **caractérisé en ce qu'**un rinçage de la couche d'activation ou/et de la couche de particules est effectué avec un liquide de rinçage aqueux en écoulement ou/et en courant, par exemple par rinçage, par rinçage par injection ou/et par rinçage par immersion.

6. Procédé selon l'une des revendications précédentes, **caractérisé en ce que** la couche d'activation est chargée positivement avec des protons ou/et des cations ou/et reçoit de telles charges, et **en ce que** la première couche de particules d'une composition contenant des particules qui est déposée sur celle-ci est de façon correspondante chargée négativement avec des anions ou/et avec au moins un composé anionique ou/et reçoit de telles charges - ou inversement.

7. Procédé selon l'une des revendications précédentes, **caractérisé en ce que** la couche d'activation ou les particules de la dernière couche de particules est/sont chargée(s) avec un liquide à charge positive ou négative ou/et avec des charges électriques positives ou négatives d'un gaz ou dans un vide (= chargement positif ou négatif).

8. Procédé selon l'une des revendications précédentes, **caractérisé en ce que** la couche d'activation chargée ou les particules chargées de la dernière couche de particules entre(nt) en contact avec au moins une substance chargée de façon correspondante, ce qui donne une charge positive ou négative encore plus forte.

9. Procédé selon l'une des revendications précédentes, **caractérisé en ce que** le chargement positif de la couche d'activation ou de particules de la couche de particules est réalisé par traitement avec au moins un acide ou/et au moins une substance qui porte des groupes cationiques, ou **en ce que** le chargement négatif d'une couche d'activation ou de particules de la couche de particules est effectué par traitement avec au moins un anion ou/et avec au moins une substance qui porte des groupes anioniques.

10. Procédé selon l'une des revendications précédentes, **caractérisé en ce que** l'activation de la couche d'activation cationique ou de particules de la couche de particules est effectuée avec au moins un composé de silicium cationique ou/et le chargement positif de la couche d'activation ou de particules de la couche de particules est effectué par traitement avec au moins un acide ou/et avec des groupes cationiques.

11. Procédé selon l'une des revendications précédentes, **caractérisé en ce que** l'activation de la couche d'activation anionique ou de particules de la couche de particules est effectuée avec au moins un composé anionique ou/et le chargement négatif de la couche d'activation ou de particules de la couche de particules est effectué par traitement avec au moins un anion ou/et avec au moins un composé anionique.

12. Procédé selon l'une des revendications précédentes, **caractérisé en ce que** la composition présente un potentiel zêta dans la plage allant de -200 à +200 mV, mesuré pour les valeurs pH d'une dispersion stable.

13. Procédé selon l'une des revendications précédentes, **caractérisé en ce que** l'on utilise en tant que particules dans la composition contenant des particules dans la couche de particules ou/et dans le revêtement formé à partir de celle-ci, des polymères organiques à base d'époxyde, éthylène acrylate, méthacrylate d'alkyle, polyéthylène, polyisobutylène, polyacrylonitrile, polychlorure de vinyle, polyméthacrylate, polyalkylméthacrylate, tel que polyméthacrylate de méthyle, polyacétate de vinyle, alcool polyvinylique, chlorure de polyvinylidène, polytétrafluoréthylène, polyisoprène, polypropylène, polyméthacrylate, polyester, polyéther, aminoplaste, polyuréthane, résine phénolique, résine alkyde, polycarbonate, polyamide, polystyrène, polysulfure, polysiloxane, acétal de polyvinyle, polyacétal, styrène acrylate, leurs dérivés, leurs composés ou/et leurs mélanges.

14. Procédé selon l'une des revendications précédentes, **caractérisé en ce que** la couche de particules produite est rincée avec un liquide de rinçage, tel que de l'eau, ou/et au moins un liquide de deuxième rinçage aqueux et est ensuite recouverte, à l'état mouillé, humide ou ayant commencé à sécher, avec au moins une composition organique d'une couche primaire ou/et d'un vernis ou/et avec d'autres particules ayant une charge opposée à celle des particules de la couche de particules précédemment déposée.

15. Procédé selon l'une des revendications précédentes, **caractérisé en ce qu'**une couche de particules contenant des particules organiques est formée et est ensuite filmée ou/et réticulée.

16. Procédé selon l'une des revendications précédentes, **caractérisé en ce que** la composition contenant des particules, la couche de particules formée à partir de celle-ci ou/et le revêtement formé à partir de celles-ci, par exemple par filmage ou/et réticulation, contient/contiennent, outre au moins un type de particules, respectivement au moins un colorant, un pigment coloré, un pigment anticorrosion, un inhibiteur de corrosion, un pigment de haute conductivité, un autre type de particules, un silane/silanol/siloxane/polysiloxane/silazane/polysilazane, un additif pour vernis ou/et un additif tel que respectivement au moins un tensioactif, un agent antimoussant ou/et un agent dispersant.

17. Procédé selon l'une des revendications précédentes, **caractérisé en ce que** la composition ou/et le revêtement formé à partir de celle-ci présente, outre au moins un type de particules et, le cas échéant, outre au moins une substance non particulaire, en partie ou en totalité une composition chimique pour une couche primaire, un vernis, par exemple pour une matière de charge, un vernis de finition ou un vernis clair.

18. Surfaces métalliques d'objets, comprenant un revêtement réalisé conformément au procédé selon l'une des revendications précédentes.

19. Utilisation des substrats dotés d'un revêtement conformément au procédé selon au moins une des revendications précédentes, en tant que fil métallique, treillis de fil métallique, bande, tôle, profilé, habillage, pièce de véhicule ou de missile, élément pour un appareil ménager, élément dans le domaine de la construction, bâti, élément de glissière de sécurité, de radiateur ou de clôture, pièce moulée de géométrie compliquée ou petites pièces telles que des vis, des écrous, des brides ou des ressorts.
